(19) **Europäisches Patentamt / European Patent Office / Office européen des brevets**

(11) **EP 4 157 722 B1**

(12) **FASCICULE DE BREVET EUROPEEN**

(45) Date de publication et mention
de la délivrance du brevet:
**20.03.2024 Bulletin 2024/12**

(21) Numéro de dépôt: **21728541.0**

(22) Date de dépôt: **25.05.2021**

(51) Classification Internationale des Brevets (IPC):
**B64G 1/24** *(2006.01)*   **B64G 1/56** *(2006.01)*
**B64G 1/68** *(2006.01)*   **B64G 1/66** *(2006.01)*

(52) Classification Coopérative des Brevets (CPC):
**B64G 1/242; B64G 1/56; B64G 1/66; B64G 1/68**

(86) Numéro de dépôt international:
**PCT/EP2021/063905**

(87) Numéro de publication internationale:
**WO 2021/239732 (02.12.2021 Gazette 2021/48)**

(54) **PROCÉDÉ D'ESTIMATION DE COLLISION ENTRE AU MOINS UN DÉBRIS SPATIAL ET UN SATELLITE**

VERFAHREN ZUR SCHÄTZUNG DER KOLLISION ZWISCHEN MINDESTENS EINEM STÜCK WELTRAUMMÜLL UND EINEM SATELLITEN

METHOD FOR ESTIMATING COLLISION BETWEEN AT LEAST ONE PIECE OF SPACE DEBRIS AND A SATELLITE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.05.2020 FR 2005477**

(43) Date de publication de la demande:
**05.04.2023 Bulletin 2023/14**

(73) Titulaire: **Airbus Defence and Space SAS
31402 Toulouse Cedex 4 (FR)**

(72) Inventeurs:
• **GEGOUT, Dorian
  31402 Toulouse cedex 4 (FR)**
• **HUE, Lara
  31402 Toulouse cedex 4 (FR)**

(74) Mandataire: **Ipside
6, Impasse Michel Labrousse
31100 Toulouse (FR)**

(56) Documents cités:
**WO-A2-2012/021760      US-A1- 2008 033 648
US-A1- 2013 292 517      US-A1- 2015 134 295
US-A1- 2019 050 136**

**Description**

**Domaine technique de l'invention**

La présente invention concerne un procédé d'estimation de collision entre au moins un débris spatial et un satellite en orbite autour de la Terre. Plus particulièrement, la présente invention concerne un procédé permettant à un satellite en orbite terrestre de pouvoir calculer de manière autonome à bord du satellite, sa probabilité de collision avec au moins un débris spatial ainsi que des manoeuvres d'évitement du au moins un débris spatial.

**Technique antérieure**

Le contexte actuel est marqué par une augmentation des projets de méga constellations, où jusqu'à 1000 satellites peuvent être exploités. De plus, le nombre de débris suivis est susceptible d'augmenter fortement : la population de débris de suivi passera de 20 000 à 100 000 objets lorsque la surface radar des débris détectés passera de 10 à 5 cm. Ces deux phénomènes entraîneront un nombre plus élevé de calculs de probabilité de collision avec les débris et donc également de calcul de manoeuvres d'évitement des débris, augmentant ainsi la charge de travail des opérateurs au sol.

Il est connu d'évaluer une probabilité $P_1$ de collision entre un satellite et un débris spatial de plusieurs manières selon la thèse présentée et soutenue le dix décembre deux mille quinze par Romain Serra, intitulé « Opérations de proximité en orbite : évaluation du risque de collision et calcul de manoeuvres optimales pour l'évitement et le rendez-vous », ladite thèse étant publiquement accessible notamment via le site internet « archivesouvertes.fr » sous la référence tel-01261497. On connaît le document US2008/0033648 qui décrit une méthode de détermination d'une manoeuvre d'évitement. Cette méthode nécessite toutefois une puissance de calcul importante ce qui limite son efficacité.

**Présentation de l'invention**

La présente invention vise à remédier à ces inconvénients avec une approche totalement novatrice.

La présente invention a pour objet un procédé d'estimation de collision entre un satellite en orbite autour de la Terre et au moins un débris spatial, le procédé comportant les étapes revendiquées dans la revendication 1.

Selon une particularité, le procédé selon l'invention comporte de plus une étape mise en oeuvre par les moyens de calculs à bord du satellite précédant l'étape de calcul de la première probabilité de collision, de :

détermination de la date de plus proche passage correspondant à une date de plus proche passage réelle, par incrémentation successive, depuis une date de plus proche passage de référence prédéterminée par les moyens de traitements d'information au sol et transmise préalablement au satellite, d'un décalage temporel vérifiant, à la date de plus proche passage réelle, un résultat quasi nul du produit scalaire d'un écart entre une position orbitale réelle du satellite et une position orbitale du débris spatial avec un écart entre une vitesse orbitale réelle du satellite et une vitesse orbitale du débris spatial, la position orbitale et la vitesse orbitale du satellite et respectivement du débris spatial étant obtenues à partir de l'orbite du satellite et respectivement du débris spatial.

Selon une autre particularité de l'invention, l'étape de calcul de la première probabilité de collision, mise en oeuvre par des moyens de calculs à bord du satellite, comprend la maximisation de la première probabilité de collision par dilution des covariances des positions orbitales du satellite et dudit débris spatial.

Selon une autre particularité, le procédé selon l'invention comprend en outre les étapes mises en oeuvre par des moyens de calculs à bord du satellite, lorsque la première probabilité de collision est supérieure à un seuil prédéfini de probabilité de collision, de :

- détermination d'une première manoeuvre d'évitement dudit débris spatial à une date de première manoeuvre d'évitement prédéterminée selon une première poussée du satellite optimisant la séparation radiale d'avec l'orbite réelle du satellite;
- correction de la position orbitale réelle du satellite à la date de la première manoeuvre d'évitement selon une première correction orbitale dépendante du vecteur de poussée du satellite relative à la première manoeuvre d'évitement ;
- propagation d'une deuxième orbite réelle corrigée du satellite depuis la position orbitale réelle réelle corrigée et sa covariance jusqu'à la date de plus proche passage en fonction de ladite matrice de transition d'état et l'orbite de référence du satellite ;
- calcul d'une seconde probabilité de collision entre le satellite et ledit débris spatial à la date de plus proche passage selon la deuxième orbite réelle du satellite.

Selon une autre particularité, le procédé selon l'invention comprend de plus les étapes mises en oeuvre par des moyens de calculs à bord du satellite, lorsque la seconde probabilité de collision est supérieure au seuil prédéfini de probabilité de collision, de :

- détermination d'une seconde manoeuvre d'évitement dudit débris spatial à une date de seconde manoeuvre d'évitement prédéterminée selon une seconde poussée du satellite optimisant la séparation radiale d'avec la seconde orbite réelle du satellite;
- correction de la position orbitale du satellite sur la seconde orbite réelle, à la date de la seconde manoeuvre d'évitement selon une seconde correction orbitale dépendante du vecteur de poussée du satellite relative à la seconde manoeuvre d'évitement ;
- propagation d'une troisième orbite réelle corrigée du satellite depuis la position orbitale corrigée du satellite à l'étape précédente et sa covariance jusqu'à la date de plus proche passage en fonction de ladite matrice de transition d'état et l'orbite de référence du satellite ;
- calcul d'une troisième probabilité de collision entre le satellite et ledit débris spatial à la date de plus proche passage selon la troisième orbite réelle du satellite.

Selon une autre particularité de l'invention, la date des manoeuvres d'évitement a lieu selon un argument de latitude de manoeuvre opposé à l'argument de la latitude de collision avec le débris spatial.

Selon une autre particularité de l'invention, la date des manoeuvres d'évitement est déterminée selon les étapes de :

- détermination d'une pluralité de créneaux horaires libres de manoeuvre permettant chacun l'exécution d'une manoeuvre d'évitement dudit débris spatial ;
- attribution à chaque manoeuvre d'évitement d'une date de manoeuvre durant un créneau horaire libre de manoeuvre déterminé distinct d'un autre créneau horaire libre d'une autre manoeuvre d'évitement.

Selon une autre particularité de l'invention, l'étape d'attribution comprend les étapes de :

- détermination de la séparation radiale maximale possible entre le satellite et le débris spatial à la date de plus proche passage sur chacun des créneaux libres de manoeuvre déterminé ;
- classification des créneaux horaires libres selon une notation représentative de la séparation radiale déterminée pour chaque créneau libre de manoeuvre ; l'étape d'attribution comportant l'attribution à chaque manoeuvre d'évitement, le créneau horaire libre de manoeuvre de meilleure notation déterminée distinct du créneau horaire libre d'une autre manoeuvre d'évitement.

Selon une autre particularité de l'invention, chaque manoeuvre d'évitement comporte la direction relative à la séparation radiale maximale associée au créneau horaire libre de manoeuvre attribué à chaque manoeuvre d'évitement.

Selon une autre particularité de l'invention, chaque manoeuvre d'évitement comporte un écart de vitesse maximal autorisé durant le créneau horaire libre de manoeuvre attribué à chaque manoeuvre d'évitement.

Selon une autre particularité de l'invention, correction orbitale relative à chaque manoeuvre d'évitement est déterminée selon les étapes de :

- propagation de l'orbite réelle du satellite jusqu'à la date de la manoeuvre d'évitement de sorte à obtenir une position orbitale avant manoeuvre ;
- évaluation de l'effet de la manoeuvre appliqué à l'orbite avant manoeuvre à la date de la manoeuvre d'évitement de sorte à déterminer l'orbite réelle après la manoeuvre d'évitement à la date de la manoeuvre d'évitement ;
- propagation de l'orbite avant manoeuvre jusqu'à la date de plus proche passage de sorte à obtenir une position orbitale de l'orbite réelle sans manoeuvre d'évitement à la date de plus proche passage ;
- propagation de la position orbitale après manoeuvre jusqu'à la date de plus proche passage de sorte à obtenir une position orbitale de l'orbite réelle avec manoeuvre d'évitement à la date de plus proche passage ;
- détermination de l'écart de position orbitale à la date de plus proche passage selon l'effet de la manoeuvre, selon la position orbitale de l'orbite réelle sans manoeuvre d'évitement à la date de plus proche passage et selon la position orbitale de l'orbite réelle avec manoeuvre d'évitement à la date de plus proche passage.

Un autre objet de l'invention concerne un système d'estimation de collision entre un satellite en orbite autour de la Terre et au moins un débris spatial, comme revendiqué dans la revendication 12.

Un premier avantage de l'invention est de permettre la prise en compte de l'orbite mesurée en temps réelle par un dispositif de navigation du satellite pour l'estimation du risque de collision.

Un autre avantage est de simplifier l'ensemble des calculs pouvant ainsi être exécutés par des moyens de calcul à bord du satellite.

Un avantage est encore que les moyens de calcul, à bord du satellite, peuvent de façon autonome anticiper une correction de sa trajectoire. Plusieurs corrections peuvent être anticipées par les moyens de calcul à bord du satellite. Des corrections peuvent aussi être réalisées par les moyens de calcul à bord du satellite pour un ou plusieurs débris.

Un avantage est aussi que les moyens de calcul à bord du satellite pour la mise en oeuvre de l'invention sont limités par rapport aux moyens de traitement au sol, mais permettent une précision accrue dans l'estimation du risque de collision et dans l'anticipation des manoeuvres d'évitement.

Un autre avantage est encore que les estimations de risque de collision, ainsi que les calculs d'éventuelles manoeuvres d'évitement peuvent être commandées au plus près de la date de plus proche passage. En effet, il n'est pas nécessaire, via une boucle sol, de transmettre le plan de manoeuvre à bord du satellite au moment où celui-ci est visible par la station sol. Cela permet d'une part d'améliorer encore la précision et d'autre part d'éviter la mise en oeuvre de manoeuvres d'évitement inutiles. En effet le passage via la boucle sol oblige à faire les calculs plus en avance, ce qui augmente les incertitudes et se traduit généralement par des manoeuvres d'évitement qui n'étaient pas forcément nécessaires.

## Brève description des figures

D'autres avantages, buts et caractéristiques de la présente invention ressortent de la description qui suit faite, dans un but explicatif et nullement limitatif, en regard des dessins annexés, dans lesquels :

- Fig. 1 : est une représentation schématique d'un satellite en orbite autour de la Terre selon son orbite de référence et selon son orbite réelle, et d'un débris spatial risquant la collision avec le satellite ;
- Fig. 2 : est une représentation schématique sous forme de graphe temporelle d'une propagation de l'orbite réelle du satellite au moyen d'une matrice de transition d'état et de son orbite de référence ;
- Fig. 3 : est une représentation schématique de l'effet d'une manoeuvre sur l'orbite réelle du satellite de la figure 2 ;
- Fig. 4 : est une représentation schématique d'une date de plus proche passage déterminée selon l'orbite de référence et de la date de plus proche passage relative à l'orbite réelle du satellite ;
- Fig. 5 : est une représentation schématique du débris spatial et du satellite, en situation de risque imminent de collision, projeté dans le plan de collision ;
- Fig. 6 : est une représentation schématique temporelle d'étape de calcul de probabilité de collision selon plusieurs manoeuvres d'évitement selon un premier mode de réalisation ;
- Fig. 7 : est une représentation schématique temporelle similaire à la figure 6 selon deux débris spatiaux risquant une collision avec le satellite
- Fig. 8 : est une représentation schématique d'un exemple de créneaux libres manoeuvre du satellite ;
- Fig. 9 : est une représentation schématique temporelle d'étape de calcul de probabilité de collision selon plusieurs manoeuvres d'évitement selon un second mode de réalisation prenant en compte les créneaux libres de manoeuvre ;
- Fig. 10 : est une représentation schématique temporelle similaire à la figure 9 selon deux débris spatiaux risquant une collision avec le satellite ;
- Fig. 11 : est un exemple d'organigramme du procédé d'estimation de collision entre le satellite en orbite autour de la Terre et au moins un débris $d_1$ spatial ;
- Fig. 12 : est un exemple d'organigramme relatif à la détermination de date de manoeuvres d'évitements ;
- Fig. 13 : est une représentation schématique d'un dispositif de mise en oeuvre du procédé d'estimation de collision entre le satellite en orbite autour de la Terre et au moins un débris $d_1$ spatial.

## Description des modes de réalisation

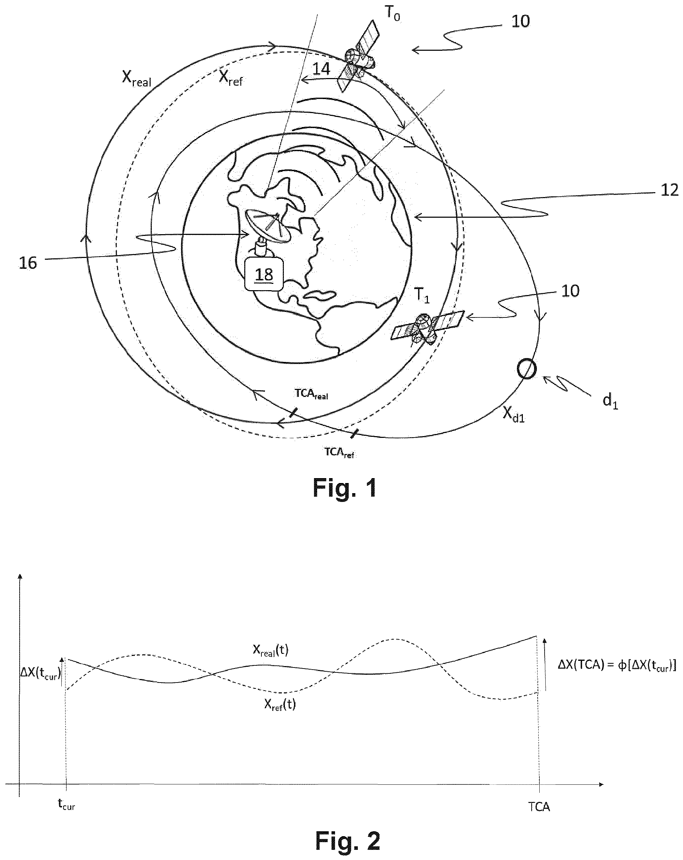

Selon la figure 1, un satellite 10 en orbite autour de la Terre 12 et un débris $d_1$ spatial en orbite également autour de la Terre 12 sont représentés. Un satellite est capable de gérer de manière autonome ses manoeuvres de maintien à poste. L'information relative aux manoeuvres de maintien à poste des satellites n'est disponible au sol que durant des dates précises durant lesquelles le satellite est dans le champ de communication avec les antennes de communication au sol permettant la liaison radio entre le satellite et les opérateurs au sol. A cet effet, la prise en compte de la manoeuvre de maintien à poste du satellite dans l'estimation de l'orbite du satellite par les opérateurs, ne peut généralement pas être opérée en temps réel, ce qui ne permet pas d'estimer correctement le risque de collision, dans la mesure où le sol n'est pas en mesure de prédire correctement la trajectoire du satellite. Le satellite 10 ne peut être en communication avec un centre de contrôle 18 de satellites que lorsqu'il est dans le champ de communication ou champs de vision 14 de moyens de communications 16 au sol relié au centre de contrôle 18 de satellites. Selon la figure 1, le satellite 10 est représenté un premier instant $T_0$ sur son orbite théorique, connue par le centre de contrôle 18 de satellites, c'est-à-dire sur son orbite liée à sa mission ou encore appelée orbite de référence $X_{ref}$ du satellite. De manière non limitative, le centre de contrôle 18 de satellites comprend des moyens de traitement d'informations et de communication avec les satellites. Les moyens de traitements d'information peuvent comprendre par exemple un microcontrôleur ou des processeurs exécutant des programmes configurés pour calculer un ensemble de données nécessaires aux satellites. Les moyens de communication peuvent comprendre des antennes d'émission et de réception pour transmettre l'ensemble des données nécessaires aux satellites.

Selon la figure 1, le satellite 10 est représenté également sur une autre orbite, dite orbite réelle $X_{real}$ du satellite 10 à un instant $T_1$ postérieur à l'instant $T_0$. En effet, l'orbite de référence $X_{ref}$ du satellite peut différer de l'orbite réelle $X_{real}$ du satellite 10. Ainsi l'orbite de référence diffère l'orbite réelle suivie par le satellite telle que mesurée par des moyens de navigation embarqués de précision accrue. Le satellite 10 comprend par exemple un dispositif de navigation lui permettant de connaître en temps réel sa position orbitale. La différence de trajectoire entre la trajectoire de l'orbite réelle $X_{real}$ et la trajectoire de l'orbite de référence $X_{ref}$ est notamment due aux manoeuvres effectuées par le satellite 10 de manière autonome et postérieures au premier instant $T_0$, comme par exemple et de manière non limitative, des manoeuvres de maintien à poste du satellite 10. La différence entre la trajectoire de l'orbite réelle $X_{real}$ et la trajectoire de l'orbite de référence $X_{ref}$, est relative notamment au fait que le satellite 10 commande ses manoeuvres pour rester proche de la trajectoire de l'orbite référence $X_{ref}$, sans pour autant être parfaitement asservi.

Le débris $d_1$ spatial a sa propre orbite $X_{d1}$ correspondant à sa propre trajectoire orbitale. Le centre de contrôle 18 de satellites au sol collabore notamment avec des agences de surveillances des débris dans l'espace telle que par exemple, l'organisme américain CSOC (Combined Space Opérations Center), ou encore l'organisme international SDA (The Space Data Association). A partir des données représentatives de l'orbite du débris spatial $X_{d1}$ et de sa covariance $COV_{d1}$, ainsi qu'à partir de l'orbite de référence $X_{ref}$ du satellite 10 et de sa covariance $COV_{sat}$, le centre de contrôle au sol est capable de déterminer une date de plus proche passage $TCA_{ref}$ de référence du débris $d_1$ spatial avec le satellite 10. La date de plus proche passage $TCA_{ref}$ de référence correspond à la date à laquelle la distance entre la position orbitale de référence moyenne et la position orbitale moyenne du débris est la plus petite.

Il est à noter, selon la figure 1, que la date de plus proche passage $TCA_{ref}$ de référence du débris $d_1$ spatial avec le satellite 10 estimée au sol, peut différer d'une date de plus proche passage $TCA_{real}$ réelle entre le débris $d_1$ spatial et le satellite lorsqu'on considère la trajectoire orbitale moyenne réelle du satellite 10 correspondant à son orbite réelle telle que mesurée par les moyens de navigation embarqués. Cette date de plus proche passage $TCA_{real}$ réelle ne peut pas être déterminée au sol, puisque le centre de contrôle 18 des satellites ne connait que l'orbite de référence $X_{ref}$ du satellite et non l'orbite réelle du $X_{real}$ du satellite.

Le satellite 10 est configuré pour estimer une probabilité de collision $P_1$ entre le débris $d_1$ spatial et le satellite 10 à une date de plus proche passage TCA en fonction de son orbite réelle. Le satellite est ainsi en mesure de calculer la probabilité de collision à la date de plus proche passage $TCA_{real}$ réelle comme il pourrait également le faire à la date de plus proche passage $TCA_{ref}$ de référence. A cet égard, le satellite 10 comprend des moyens de calculs pouvant par exemple et de manière non limitative comprendre un microcontrôleur. Afin d'estimer une probabilité de collision $P_1$ entre le débris $d_1$ spatial et le satellite 10 à une date de plus proche passage TCA, il convient de connaitre l'orbite du satellite 10 et sa covariance $COV_{sat}$ à cette date de plus proche passage TCA, ainsi que la position orbitale du débris $d_1$ spatial et sa covariance $COV_{d1}$ à cette date de plus proche passage TCA. A cet effet, il convient de déterminer, une éphéméride de données permettant de propager une différence d'état, encore appeler éphéméride de données de transition d'état ou matrice de transition d'état, permettant une propagation de l'orbite réelle $X_{real}(t)$ du satellite et de sa covariance Cov à cette date de plus proche passage TCA de référence.

Plus particulièrement on peut propager l'orbite réelle du satellite à l'aide d'une matrice de transition d'état $\varphi$. Au moins une matrice de transition d'état $\varphi$ est déterminée par le centre de contrôle 18 des satellites. La matrice de transition d'état $\varphi$ permet par exemple une propagation, à la date de plus proche passage $TCA_{ref}$ de référence, de l'orbite réelle $X_{real}$ du satellite et de sa covariance $COV_{sat}$ mesurée à un instant $t_0$.

A cet effet, dans le but de rendre autonome le satellite 10 sur sa capacité à estimer plus précisément une probabilité de collision avec un débris $d_1$ spatial, on peut calculer, par les moyens de traitement de l'information au sol, la matrice de transition d'état $\varphi$ et communiquer au satellite 10 cette matrice de transition d'état $\varphi$ ($t_0$->$TCA_{ref}$). Le satellite 10 pourra ainsi déterminer son orbite à $t_0$ puis son orbite à la date de plus proche passage $TCA_{ref}$ de référence. On détermine, par les moyens de calcul à bord du satellite, la propagation de la différence d'orbite entre l'orbite réelle $X_{real}$ du satellite 10 et l'orbite de référence $X_{ref}$ du satellite 10. On notera que la propagation dans le temps de l'orbite réelle $X_{real}$ du satellite 10 peut être calculée selon l'équation suivante :

$$X_{real}(t) = X_{ref}(t) + \Delta X(t) \qquad (1)$$

ou encore, en considérant la matrice de transition d'état $\varphi$ :

$$X_{real}(t) = X_{ref}(t) + \varphi_{(t0 \to t)}\Delta X(t_0) \qquad (2)$$

L'équation (2) est par exemple utilisée pour déterminer l'orbite réelle $X_{real}$ à la date de plus proche passage de référence $TCA_{ref}$, avec une matrice de transition d'état $\varphi$ ($t_0$->$TCA_{ref}$) préalablement fournie par le centre de contrôle au sol. Plusieurs matrices de transition d'état entre deux instants d'intérêt, correspondant par exemple à des manoeuvres d'évitement prédictibles envisagées, peuvent être fournies au satellite. Le satellite 10 peut en outre recevoir depuis le centre de contrôle 18 des satellites des informations comportant notamment l'orbite et la covariance liées au débris $d_1$ spatial, la date de plus proche passage $TCA_{ref}$ de référence et l'orbite de référence $X_{ref}$ du satellite 10 en au moins deux instants d'intérêt correspondant à l'instant de déclenchement du calcul de probabilité et à la date de plus proche passage de référence.

L'orbite du satellite correspond à un ensemble d'éléments à six dimensions. Un exemple d'orbite sera détaillé ultérieurement.

Afin de limiter le volume de données que les moyens de calcul du satellite 10 devront traiter, les données transmises par le centre de contrôle 18 des satellites permettant aux moyens de calcul embarqués de calculer la probabilité de collision $P_1$ avec le débris $d_1$ spatial peuvent se limiter à :

- au moins une date d'activation $t_{cur}$ pour le calcul de la probabilité $P_1$ de collision ;
- au moins une matrice de transition d'état $\varphi$ entre la date d'activation $t_{cur}$ et la date de plus proche passage $TCA_{ref}$ de référence ;
- l'orbite de référence du satellite au moins à la date d'activation $t_{cur}$ et à la date de plus proche passage $TCA_{ref}$ de référence ;
- l'orbite du débris $d_1$ spatial et sa covariance au moins à la date de plus proche passage $TCA_{ref}$ de référence.

A cet effet, l'orbite de référence $X_{ref}$ peut être notamment déterminée depuis le centre de contrôle 18 des satellites par l'utilisation d'un modèle complexe depuis les paramètres orbitaux en incluant également les harmoniques supérieurs du potentiel gravitationnel de la Terre. La matrice de transition d'état $\varphi$ peut être calculée à partir d'un développement limité autour de l'orbite de référence du satellite et sera envoyée au satellite en même temps que les informations relatives à l'orbite débris $d_1$ spatial et à sa covariance. La propagation utilisée lors du calcul à l'aide de la matrice de transition d'état $\varphi$ peut ainsi prendre en compte des modèles complexes nécessaires à une haute précision. Un avantage de calculer la matrice de transition d'état $\varphi$ à partir du centre de contrôle 18 des satellites est notamment de pouvoir profiter d'une puissance de calcul bien plus importante que celle pouvant être embarquée dans le satellite 10.

La propagation de l'orbite de référence $X_{ref}$ du satellite 10 peut être déterminée, par des moyens de traitement de l'information au sol, selon une propagation en dérive libre de l'orbite de référence $X_{ref}$ du satellite 10, c'est-à-dire sans manoeuvre du satellite 10, à partir de la date d'activation $t_{cur}$ jusqu'à la date de plus proche passage $TCA_{ref}$ de référence. A cet égard, les moyens de traitement de l'information au sol déterminent l'orbite de référence $X_{ref}$ du satellite 10 et la matrice de transition d'état ($\varphi(t_{cur} \rightarrow TCA_{ref})$ entre la date d'activation et la date de plus proche passage de référence.

Plus particulièrement, il s'agit de reconstruire l'orbite de référence $X_{ref}$ à la date d'activation $t_{cur}$ et de propager cette orbite $X_{ref}(t_{cur})$ de référence à la date de plus proche passage $TCA_{ref}$ de référence. Cela permet d'avoir :

- l'orbite de référence $X_{ref}(t_{cur})$ à la date d'activation $t_{cur}$ ;
- l'orbite de référence $X_{ref}(TCA_{ref})$ propagée à la date de plus proche passage $TCA_{ref}$ de référence ;
- la matrice de transitions d'état ($\varphi(t_{cur} \rightarrow TCA_{ref})$ entre la date d'activation $t_{cur}$ et la date de plus proche passage $TCA_{ref}$ de référence.

Selon la figure 2, on notera que la propagation jusqu'à la date de plus proche passage $TCA_{ref}$ de référence de l'orbite réelle $X_{real}$ du satellite 10 peut être calculée par les moyens de calcul embarqués par le satellite 10 selon l'équation suivante :

$$X_{real}(TCA_{ref}) = X_{ref}(TCA_{ref}) + \Delta X(TCA_{ref}) \qquad (3)$$

A cet égard, le satellite 10, connaissant son orbite réelle $X_{real}(t_{cur})$ à la date d'activation $t_{cur}$ grâce notamment à son dispositif de navigation, est capable de calculer la différence orbitale $\Delta X(t_{cur})$ entre son orbite $Xreal(t_{cur})$ réelle à la date d'activation $t_{cur}$ et l'orbite de référence du satellite $X_{ref}(t_{cur})$ à la date d'activation $t_{cur}$, selon l'équation suivante :

$$\Delta X(t_{cur}) = X_{real}(t_{cur}) - X_{ref}(t_{cur}) \qquad (4)$$

Connaissant la matrice de transition d'état $\varphi(t_{cur} \rightarrow TCA_{ref})$ entre la date d'activation et la date de plus proche passage de référence, à partir de l'équation (4), l'équation (3) peut également s'écrire :

$$X_{real}(TCA_{ref}) = X_{ref}(TCA_{ref}) + \varphi(t_{cur} \rightarrow TCA_{ref}) \times \Delta X(t_{cur}) \quad (5)$$

La matrice de transition d'état ($\varphi(t_{cur} \rightarrow TCA_{ref})$ entre la date d'activation et la date de plus proche passage est appliquée à l'écart orbital, déterminé à la date d'activation, pour en déduire un écart orbital à la date de plus proche passage.

Les moyens de calcul embarqués par le satellite 10 permettent également de calculer la covariance $COV_{sat}(TCA_{ref})$ du satellite 10 à la date de plus proche passage $TCA_{ref}$ connaissant la covariance $COV_{sat}(t_{cur})$ de l'orbite du satellite 10 à la date d'activation $t_{cur}$, selon l'équation suivante :

$$COV_{sat}(TCA_{ref}) = \varphi(t_{cur} \rightarrow TCA_{ref}) \times COV_{sat}(t_{cur}) \times \varphi(t_{cur} \rightarrow TCA_{ref})^{t} \quad (6)$$

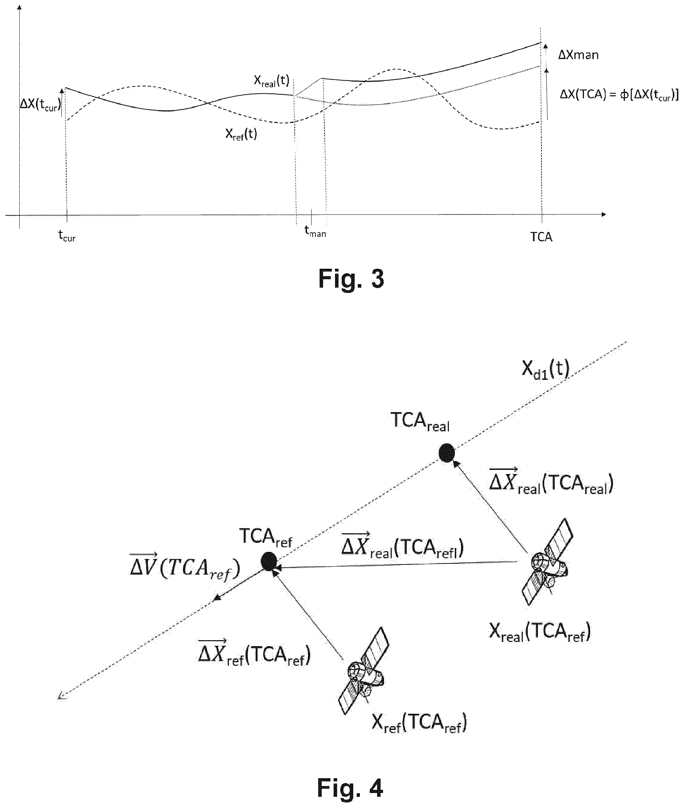

Dans l'exemple de la figure 3, en comparaison avec la figure 2, le satellite 10 a en outre effectué une manoeuvre postérieurement à la date d'activation. Cette manoeuvre engendre sur l'orbite réelle $X_{real}(TCA_{ref})$ du satellite à la date de plus proche passage $TCA_{ref}$ de référence, un écart $\Delta X_{man}$ orbital déterminé par les moyens de calcul embarqués du satellite 10. La prise en compte d'une manoeuvre du satellite 10 se traduit par une correction orbitale réelle $X_{real}(TCA_{ref})$ du satellite à la date de plus proche passage $TCA_{ref}$ de référence selon l'équation suivante :

$$X_{real}(TCA_{ref}) = X_{ref}(TCA_{ref}) + \Delta X(TCA_{ref}) + \Delta X_{man}(TCA_{ref}) \quad (7)$$

L'écart orbital $\Delta X_{man}(TCA_{ref})$ dû à la manoeuvre représente l'effet de la manoeuvre à la date de plus proche passage $TCA_{ref}$ de référence. Dans le cas où notamment les matrices de transition d'état prenant en compte la date de manoeuvre ne seraient pas fournies, la détermination de l'écart orbital $\Delta X_{man}(TCA_{ref})$, dénommé également correction orbitale, à la date de plus proche passage $TCA_{ref}$ de référence, peut être réalisée selon les étapes suivantes :

- propagation de l'orbite réelle $X_{real}$ depuis la date d'activation $t_{cur}$ jusqu'à la date $t_{man}$ de manoeuvre pour laquelle un effet séculaire J2 est ajouté de sorte à obtenir une orbite $X_{real\_b}(t_{man})$ avant manoeuvre ;
- évaluation de l'effet de la manoeuvre $\Delta X_{man}(t_{man})$ selon l'équation de Gauss appliqué à l'orbite $X_{real\_b}(t_{man})$ avant manoeuvre, de sorte que

$$\Delta X(t_{man}) = G\left(X_{real\_b}(t_{man})\right)\overrightarrow{\Delta V}$$

où G est une matrice relative à la poussée de la manoeuvre, déterminée à partir des équations de Gauss où $\overrightarrow{\Delta V}$ représente la variation de vitesse de la manoeuvre dans le repère orbital local du satellite TNW (T vecteur selon la vitesse courante V, W vecteur selon la normale à l'orbite i.e. au produit vectoriel $\vec{P} \times \vec{V}$ où $\vec{P}$ est la position du satellite,
et où N complète le repère orthogonal ;

- évaluation de l'orbite réelle $X_{real\_a}(t_{man})$ après manoeuvre selon l'équation suivante :

$$X_{real\_a}(t_{man}) = X_{real\_b}(t_{man}) + \Delta X_{man}(t_{man}) \quad (8)$$

- propagation de l'effet de la manoeuvre $\Delta X_{man}(t_{man})$ sur l'argument de la latitude du satellite 10 et l'ascension droite du noeud ascendant du plan orbitale du satellite 10. A cet effet, deux propagations avec un effet séculaire 'J2' sont déterminées, c'est-à-dire une première propagation de l'orbite réelle après manoeuvre $X_{real\_a}$ depuis la date $t_{man}$ de manoeuvre jusqu'à la date de plus proche passage $TCA_{ref}$ de référence, et une seconde propagation de l'orbite réelle avant manoeuvre $X_{real\_b}$ depuis la date $t_{man}$ de manoeuvre jusqu'à la date de plus proche passage $TCA_{ref}$ de référence. A cet effet, deux orbites sont obtenues. Une première orbite $X_{real\_a}(TCA_{ref})$ du satellite 10 prenant en compte l'effet de la manoeuvre et une seconde position orbitale $X_{real-b}(TCA_{ref})$ du satellite 10 ne prenant pas en compte l'effet de la manoeuvre ;
- détermination de l'écart $\Delta X_{man}(TCA_{ref})$ de position orbitale selon l'équation suivante :

$$\Delta X_{man}(TCA_{ref}) = \Delta X_{man}(t_{man}) + X_{real\_a}(TCA_{ref}) - X_{real\_b}(TCA_{ref}) \quad (9)$$

L'avantage de la formulation de l'écart $\Delta X_{man}(TCA_{ref})$ de position orbitale selon l'équation (9) est que les effets de la manoeuvre sont séparés avec les effets intégrés dans le temps sur l'orbite réelle à la date de plus proche passage $TCA_{ref}$ de référence avec manoeuvre $X_{real\_a}(TCA_{ref})$ et sans manoeuvre $X_{real\_b}(TCA_{ref})$. L'effet direct d'une manoeuvre concerne les paramètres de l'orbite du satellite 10, à savoir: le demi grand axe 'a', le vecteur d'excentricité $[e_x, e_y]$, l'inclinaison 'i', et parfois l'ascension droite '$\Omega$' du noeud ascendant du plan orbitale du satellite 10. L'effet intégré dans le temps concerne seulement l'ascension droite '$\Omega$' du noeud ascendant du plan orbitale du satellite 10 et l'argument de la latitude '$\alpha$' du satellite 10. Ceci signifie que l'effet séculaire 'J2' peut être à considérer seulement pour la propagation de ces deux paramètres. La propagation avec l'effet séculaire 'J2' peut être décrite selon les formulations suivantes : Selon une date initiale $t_0$ et une date $t_1$ final de propagation, c'est-à-dire depuis une position orbitale initiale $X(t_0) = [a_0, e_{x0}, e_{y0}, i_0, \Omega_0, \alpha_0]$, la position orbitale finale $X(t_1) = [a_1, e_{x1}, e_{y1}, i_1, \Omega_1, \alpha_1]$ est évaluée selon les équations suivantes :

$$a_1 = a_0 \quad (10)$$

$$e_{x1} = e_{x0} \quad (11)$$

$$e_{y1} = e_{y0} \quad (12)$$

$$i_1 = i_2 \quad (13)$$

$$\Omega_1 = \Omega_0 + \frac{d\Omega}{dt}(X(t_0)).(t_1 - t_0) \quad (14)$$

$$\alpha_1 = \alpha_0 + \frac{d\alpha}{dt}(X(t_0)).(t_1 - t_0) \quad (15)$$

pour lesquelles, $\frac{d\Omega}{dt}(X(t_0))$ et $\frac{d\alpha}{dt}(X(t_0))$ sont les taux angulaires correspondant respectivement à l'ascension droite '$\Omega$' du noeud ascendant du plan orbitale du satellite 10 et l'argument de la latitude '$\alpha$' du satellite 10, incluant l'effet séculaire 'J2'.

Il est également avantageux de calculer la probabilité de collision $P_1$ du satellite 10 selon son orbite réelle $X_{real}$ avec le débris $d_1$ spatial, à une date de plus proche passage réelle $TCA_{real}$. A cet effet, afin d'optimiser le calcul de la probabilité $P_1$ de collision, les moyens de calculs du satellite 10 sont configurés pour déterminer la date de plus proche passage $TCA_{real}$ réelle en tenant compte de l'orbite réel $X_{real}$ du satellite 10.

A cet effet, selon la figure 4, une approximation linéaire de la trajectoire orbitale $X_{d1}(t)$ du débris $d_1$ spatial dans le plan orbital du satellite est représentée. La date de plus proche passage de référence $TCA_{ref}$ peut différer de la date de plus proche passage réelle $TCA_{real}$. A la date de plus proche passage $TCA_{real}$ réelle, le produit scalaire du vecteur $\overrightarrow{\Delta X}_{real}$ représentatif de l'écart de position orbitale entre la position orbitale réelle du satellite 10 et la position orbitale du débris $d_1$ spatial, avec l'écart de vitesse orbitale $\overrightarrow{\Delta V}$ entre le satellite 10 et le débris $d_1$ spatial doit être nul ou quasiment nul. En d'autres termes l'équation suivante doit être vérifiée :

$$\overrightarrow{\Delta X}_{real} . \overrightarrow{\Delta V} \approx 0 \quad (16)$$

selon laquelle $\overrightarrow{\Delta X}_{real}$ représente l'écart de position orbitale entre le satellite 10 et le débris $d_1$ spatial à la date de plus proche passage $TCA_{real}$ réelle, et $\overrightarrow{\Delta V}$ représente l'écart de vitesse orbitale entre le satellite 10 et le débris $d_1$ spatial à la date de plus proche passage $TCA_{real}$ réelle.

Afin de déterminer la date de plus proche passage $TCA_{real}$ réelle vérifiant l'équation (16), les moyens de calculs du satellite 10 sont configurés pour déterminer le décalage temporel ΔTCA entre deux dates de plus proche passage $TCA_{real}$ réelles calculées successivement. Le premier décalage temporel ΔTCA correspond à l'écart entre la date de plus proche passage $TCA_{ref}$ de référence et la première estimation de $TCA_{real}$. On procède ensuite par itération en calculant une nouvelle date de plus proche passage réelle, jusqu'à obtenir, un décalage temporel ΔTCA inférieure à un seuil prédéterminée, comme par exemple inférieure à une microseconde. L'itération est effectuée en remplaçant à chaque fois la valeur de la date de plus proche passage $TCA_{real\_N-1}$ par une nouvelle date de plus proche passage $TCA_{real\_N}$ telle que : $TCA_{refal\_N} = TCA_{real\_N-1} + \Delta TCA_N$ jusqu'à ce que le décalage temporel ΔTCA soit inférieure à une microseconde.

Le décalage temporel ΔTCA peut être calculé selon l'équation suivante :

$$\Delta TCA\_N = - \frac{\overrightarrow{\Delta X}\,real\,(TCAreal\_N-1).\overrightarrow{\Delta V}(TCAreal\_N-1)}{(\Delta V(TCAreal\_N-1))^2} \quad (17)$$

selon laquelle $\overrightarrow{\Delta X}_{real}(TCA_{real\_N-1})$ représente l'écart entre la position orbitale réelle du satellite 10 et la position orbitale du débris $d_1$ spatial à la date de plus proche passage, selon l'itération considérée sur la date de plus proche passage, et $\overrightarrow{\Delta V}(TCA_{real\_N-1})$ représente l'écart de vitesse orbitale entre la vitesse du satellite 10 et la vitesse du débris $d_1$ spatial à la date de plus proche passage, selon l'itération considérée sur la date de plus proche passage. Lorsque l'itération est finie, on a la date de plus proche passage $TCA_{real}$ réelle qui correspond à la nouvelle date de plus proche passage ayant permis de déterminer un décalage temporel ΔTCA inférieure à un seuil prédéterminé, par exemple d'une microseconde.

Le satellite 10 peut avantageusement déterminer son orbite réelle et l'orbite du débris $d_1$, ainsi que leur covariance associée à la date de plus proche passage $TCA_{ref}$ de référence ou à la date de plus proche passage $TCA_{real}$ réelle. Pour cela les moyens de calcul du satellite 10 ont permis de déterminer comme décrit précédemment en fonction notamment d'une matrice de transition d'état φ, les orbites et les covariances associées du débris $d_1$ spatial et du satellite 10 à la date de plus proche passage $TCA_{ref}$ de référence. Les moyens de calcul du satellite 10 permettent également de calculer l'orbite de $X_{real}$ réelle du satellite 10 et l'orbite $X_{d1}$ du débris $d_1$ spatial à la date de plus proche passage $TCA_{real}$ réelle, par propagation simplifiée, c'est-à-dire uniquement képlérienne. Les moyens de calcul du satellite 10 permettent de propager l'orbite de $X_{real}$ réelle du satellite 10 et l'orbite du débris $d_1$ spatial depuis la date de plus proche passage $TCA_{ref}$ de référence jusqu'à la date de plus proche passage $TCA_{real}$ réelle. Les moyens de calcul du satellite 10 sont configurés pour calculer la probabilité de collision $P_1$ entre le satellite 10 sur sa trajectoire orbitale réelle $X_{real}$ et le débris $d_1$ spatial.

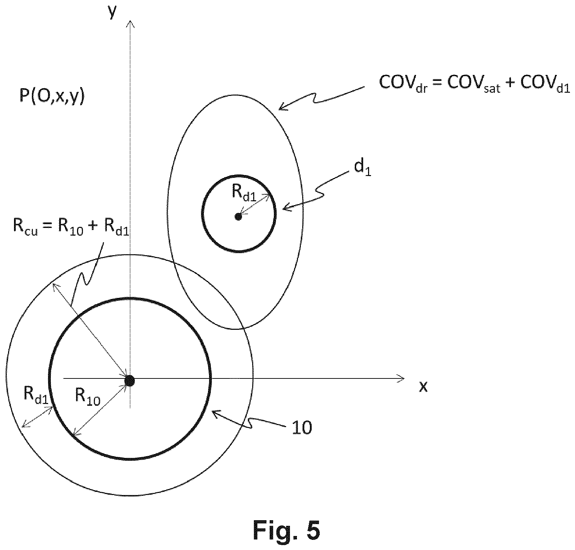

Selon la figure 5, le débris $d_1$ spatial et le satellite 10 selon leur position orbitale relative $\overrightarrow{\Delta X}_{real}(TCA\_real)$ à la date de plus proche passage $TCA\_real$ considérée, ainsi que leur covariance $COV_{sat}$, $COV_{d1}$ sont représentés et projetés dans un plan $P(O,x,y)$, ce plan $P(O,x,y)$ étant pris orthogonal à la vitesse relative $\overrightarrow{\Delta V}$ entre le satellite 10 et le débris $d_1$ spatial. Le satellite 10 et le débris $d_1$ spatial sont modélisés selon respectivement un cercle de rayon $R_{10}$ pour le satellite et de rayon $Rd_1$ pour le débris spatial $d_1$. La distance relative entre le satellite 10 et le débris $d_1$ spatial est projetée dans le plan de l'orbite du satellite 10, ainsi que sa covariance $COV_{dr}$ associée. La covariance $COV_{dr}$ de la distance relative s'exprime par la somme de la covariance du satellite 10 et du débris $d_1$ spatial.

La covariance $COV_{pdr}$ projetée de la distance relative peut s'exprimer dans une base B quelconque selon la matrice diagonale :

$$COVpdr = \begin{pmatrix} \sigma_x & 0 \\ 0 & \sigma_y \end{pmatrix} \quad (18)$$

selon laquelle $\sigma_x$ et $\sigma_y$ représentent les dispersions de positons. Un ensemble $Cr(x,y)$ est défini comme un ensemble des points x, y dans le cercle de rayon $R_{cu}$ cumulé représentatif de la somme du rayon $R_{10}$ du satellite 10 modélisé et du rayon $R_{d1}$ du débris $d_1$ spatial modélisé. A cet effet, l'ensemble $Cr(x,y)$ des points x,y répond au critère selon lequel :

$$x^2 + y^2 < R^2_{cu} \quad (19)$$

La probabilité de collision $P_1$ correspond à la probabilité pour laquelle l'écart en distance entre le satellite 10 et le débris $d_1$ spatial peut être inférieur au rayon $R_{cu}$ cumulé. La probabilité de collision $P_1$ peut donc être calculée en

**EP 4 157 722 B1**

intégrant la fonction de densité de probabilité de l'écart de distance sur le cercle de rayon $R_{cu}$ cumulé. Avec des lois de densité prises avec une distribution normale, avec des valeurs moyennes $\bar{x}$ et $\bar{y}$ correspondant aux coordonnées de la distance relative projetée dans le plan de l'orbite du satellite 10, et des dispersions $\sigma_x$ et $\sigma_y$, la probabilité $P_1$ de collision peut s'écrire sous la forme numérique suivante :

$$P_1 = \iint_{(x,y)\in Cr} \frac{1}{\sigma_x.\sigma_y.2\pi} * e^{\frac{(x-\bar{x})^2}{2.\sigma_x^2}} * e^{\frac{(y-\bar{y})^2}{2.\sigma_y^2}} * dx.dy \quad (20)$$

Il est avantageux de minimiser au maximum la puissance de calcul des moyens de calcul embarqués dans le satellite. A cet effet, il est préférable pour les moyens de calcul embarqués dans le satellite d'évaluer la probabilité de collision $P_1$ selon une expression semi-analytique, voire de préférence analytique.

On notera particulièrement que la probabilité de collision $P_1$ entre le satellite 10 et le débris $d_1$ spatial peut s'évaluer selon l'équation semi-analytique suivante :

$$P_1 = \int \frac{1}{2\sqrt{2\pi}\sigma_x} e^{-\frac{1}{2}\left(\frac{x-\bar{x}}{\sigma_x}\right)^2} \left( \text{erf}\left(\frac{\bar{y}+\sqrt{r^2-x^2}}{\sqrt{2}\sigma_y}\right) - \text{erf}\left(\frac{\bar{y}-\sqrt{r^2-x^2}}{\sqrt{2}\sigma_y}\right) \right) dx \quad (21)$$

Cette expression permet une évaluation plus rapide que la formulation numérique car elle nécessite une seule intégration et l'évaluation d'une fonction d'erreur erf.

On notera également, de préférence que la probabilité de collision $P_1$ entre le satellite 10 et le débris $d_1$ spatial peut s'évaluer également selon l'équation analytique sous la forme d'une série convergente à termes positifs, selon la formulation suivante :

$$P_1 = e^{\left(\frac{R^2}{2\sigma_x^2}\right)} \sum_{k=0}^{\infty} \frac{\alpha_k}{(k+1)!} R^{2(k+1)} \quad (22)$$

La formulation analytique permet la meilleure rapidité de calcul de la probabilité de collision $P_1$ entre le satellite 10 et le débris $d_1$ spatial.

Il est à noter que la détermination de l'orbite $X_{real}$ réelle du satellite 10 et de l'orbite $X_{d1}$ du débris $d_1$ spatial induit une incertitude sur les covariances $COV_{sat}$, $COV_{d1}$ estimées liées aux orbites déterminées. De préférence, afin de prendre en compte une telle incertitude dans le calcul de la probabilité de collision $P_1$ entre le satellite 10 et le débris $d_1$ spatial, il est possible de maximiser la probabilité de collision $P_1$ en déplaçant à la fois la covariance $COV_{sat}$ de l'orbite $X_{real}$ réelle du satellite et la covariance $COV_{d1}$ de l'orbite $X_{d1}$ du débris $d_1$ spatial. La technique utilisée permettant de déplacer à la fois la covariance $COV_{sat}$ de l'orbite $X_{real}$ réelle du satellite et la covariance $COV_{d1}$ de l'orbite $X_{d1}$ du débris $d_1$ spatial est une technique dite de dilution des covariances. A cet effet, de préférence, un coefficient $K_{sat}$ lié à la covariance $COV_{sat}$ du satellite 10 et un coefficient $K_{d1}$ lié à la covariance $COV_{d1}$ du débris $d_1$ spatial sont ajoutés relativement au calcul de la probabilité $P_1$ de collision. La détermination des coefficients liés aux covariances, comprend la détermination du couple (Ks, Kd) de coefficient qui maximise la probabilité $P_1$ de collision nécessitant notamment la connaissance de la covariance $COV_{dr}$ cumulée déterminée selon l'équation suivante :

$$COVdr = Ks \times COVsat + Kd \times COVd1 \quad (23)$$

Un tel optimum peut être, par exemple et de manière non limitative, déterminé selon une méthode de gradient désignée sous le nom méthode du nombre d'or. Par exemple et de manière non limitative, le couple (Ks, Kd) de coefficients où chaque coefficient est compris dans un intervalle allant de 0,2 à 5.

Le procédé d'estimation de collision entre le débris $d_1$ spatial et le satellite 10 en orbite autour de la Terre 12 comprend l'estimation de la probabilité de collision $P_1$ pour laquelle la collision pourrait se produire à la date de plus proche passage TCA considérée, c'est-à-dire soit la date de plus proche passage $TCA_{ref}$ de référence ou soit la date de plus proche passage $TCA_{real}$ réelle.

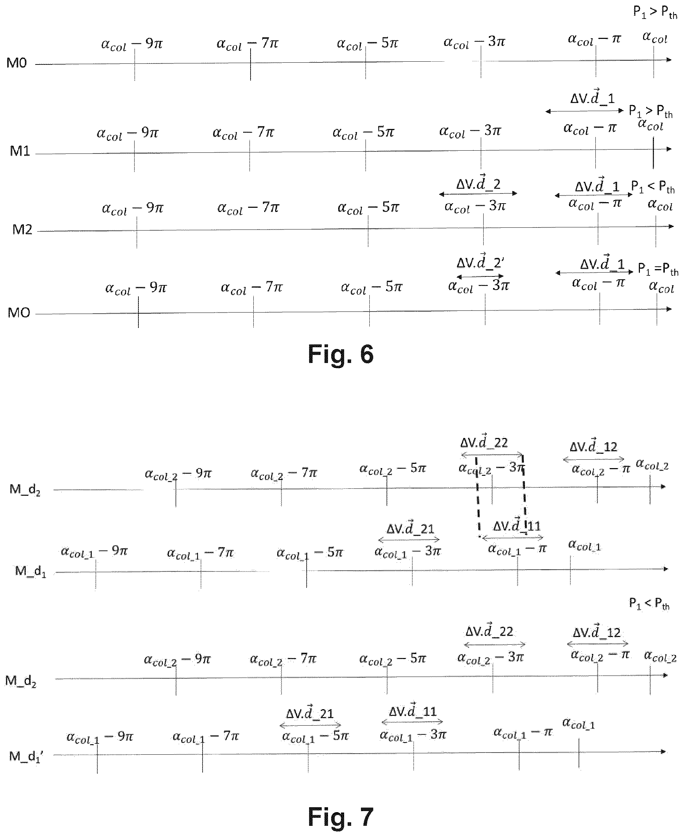

Comme représenté selon l'exemple de la figure 6, le procédé d'estimation de collision, peut comprendre la détermination d'une ou plusieurs manoeuvres $\Delta V.\vec{d}$ d'évitement permettant de réduire la probabilité de collision $P_1$ du

**10**

satellite 10 avec le débris d1 à la date de plus proche passage TCA considéré, c'est-à-dire à une position orbitale correspondant à un argument de la latitude $\alpha_{col}$ à la date de plus proche passage TCA considéré, dit encore argument de la latitude $\alpha_{col}$ de collision. De manière optimum, chaque manoeuvre $\Delta V.\vec{d}$ d'évitement peut avoir lieu selon un argment de latittude $\alpha_{man}$ de manoeuvre opposé à l'argument de la latittude $\alpha_{col}$ de collision avec le débris $d_1$ spatial, c'est-à-dire localisée au moins selon un argument de latitude de manoeuvre égale à $\alpha_{man} = \alpha_{col} - (2n - 1). \pi$ pour laquelle, de préférence 'n' est un entier suppérieur à zéro

Selon la figure 6, une étape préliminaire M0 du procédé d'estimation de collision comprend la détermination de l'argument de la latitude $\alpha_{col}$ du satellite 10 pour lequel la collision peut être probable, c'est-à-dire l'argument de la latitude $\alpha_{col}$ de collision. A cet effet, à partir de la date de plus proche passage TCA considérée, les moyens de calcul embarqués par le satellite 10 peuvent déterminer l'argument de la latitude $\alpha_{col}$ de collision. La probabilité de collision $P_1$ selon l'orbite $X_{real}$ réelle du satellite à la date de plus proche passage TCA considérée est supérieure à un seuil prédéfini de probabilité $P_{th}$ de collision, ce dit seuil prédéfini de probabilité $P_{th}$ de collision pouvant être par exemple et de manière non limitative, un seuil dit seuil critique, au-dessus duquel il est considéré que le risque de collision soit trop élevé pour maintenir l'orbite du satellite tel quel.

A cet effet, selon une première étape M1, de préférence, une première manoeuvre $\Delta V.\vec{d}\_1$ d'évitement doit être déterminée par les moyens de calcul embarqués par le satellite 10. A cet effet, les moyens de calcul sont configurés pour estimer la première manoeuvre $\Delta V.\vec{d}\_1$ d'évitement permettant la séparation radiale entre le satellite 10 et le débris $d_1$ spatial à la date de plus proche passage TCA considérée. Cette première manoeuvre $\Delta V.\vec{d}\_1$ d'évitement doit être de préférence exécutée pour une position orbitale du satellite 10 opposée à celle que le satellite 10 aurai à la date de plus proche passage TCA considérée afin de maximiser la séparation radiale entre le satellite 10 et le débris $d_1$ spatial à la date de plus proche passage TCA considérée.

Cette première manoeuvre $\Delta V.\vec{d}\_1$ d'évitement doit être également suffisamment éloignée dans le temps dans le temps pour qu'elle puisse être exécutée avant la probable collision. La position orbitale du satellite 10 pour laquelle l'exécution de la première manoeuvre $\Delta V.\vec{d}\_1$ d'évitement pourrai être effective, pourra être choisie, par exemple et de manière non limitative, à une position orbitale du satellite 10 correspondant à un argument de latitude $\alpha_{man1}$ de première manoeuvre $\Delta V.\vec{d}\_1$ d'évitement selon l'équation suivante :

$$\alpha_{man1} = \alpha_{col} - \pi \qquad (24)$$

Suite à cette première manoeuvre $\Delta V.\vec{d}\_1$ d'évitement, les moyens de calcul embarqués dans le satellite 10 sont configurés pour estimer une nouvelle trajectoire de l'orbite $X_{real}$ réelle du satellite 10 comme expliqué selon la figure 3 et selon les équations (7) et (9) de la présente invention. A cet effet, les moyens de calcul embarqués dans le satellite 10 sont configurés pour estimer de nouveau la probabilité de collision $P_1$ suite à la première manoeuvre $\Delta V.\vec{d}\_1$ d'évitement. Selon l'exemple représenté à la figure 6, la probabilité de collision $P_1$ faisant suite à la première manoeuvre $\Delta V.\vec{d}\_1$ d'évitement déterminée est supérieure au seuil prédéfini de probabilité $P_{th}$ de collision.

A cet effet, selon une seconde étape M2, de préférence, une seconde manoeuvre $\Delta V.\vec{d}\_2$ d'évitement est déterminée par les moyens de calcul embarqués dans le satellite 10. Afin de maximiser la séparation radiale entre le satellite 10 et le débris $d_1$ spatial à la date de plus proche passage TCA considérée, la seconde manoeuvre $\Delta V.\vec{d}\_2$ d'évitement doit être exécutée de préférence selon une position orbitale du satellite 10 durant une orbite avant la première manoeuvre $\Delta V.\vec{d}\_1$ d'évitement. Plus précisément, la position orbitale du satellite 10 pour laquelle l'exécution de la seconde manoeuvre $\Delta V.\vec{d}\_2$ d'évitement pourrai être effective, pourra être choisie, par exemple et de manière non limitative, à une position orbitale du satellite 10 correspondant à un argument de latitude $\alpha_{man2}$ de première manoeuvre $\Delta V.\vec{d}\_2$ d'évitement selon l'équation suivante :

$$\alpha_{man2} = \alpha_{col} - 3\pi \qquad (25)$$

Suite à cette seconde manoeuvre $\Delta V.\vec{d}\_2$ d'évitement, les moyens de calcul embarqués dans le satellite 10 sont configurés pour estimer une nouvelle trajectoire orbitale du satellite 10 comme expliqué selon la figure 3 et selon les équations (7) et (9) de la présente invention. A cet effet, les moyens de calcul embarqués dans le satellite 10 sont configurés pour estimer de nouveau la probabilité de collision $P_1$ faisant suite à la seconde manoeuvre $\Delta V.\vec{d}\_2$ d'évitement. Selon l'exemple non limitatif de la figure 6, la probabilité de collision $P_1$ faisant suite à la seconde manoeuvre $\Delta V.\vec{d}\_2$ d'évitement déterminée est inférieure au seuil prédéfini de probabilité $P_{th}$ de collision.

De manière générale, selon la valeur la probabilité de collision $P_1$ faisant suite à la seconde manoeuvre $\Delta V.$

$\vec{d}\_2$ d'évitement, les moyens de calcul embarqués dans le satellite 10 peuvent soit évaluer d'autres manoeuvres d'évitement en plus de la première manoeuvre $\Delta V.\vec{d}\_1$ d'évitement et de la seconde manoeuvre $\Delta V.\vec{d}\_2$ d'évitement selon le même principe que celui exposé pour la première manoeuvre $\Delta V.\vec{d}\_1$ d'évitement et pour la seconde manoeuvre $\Delta V.\vec{d}\_2$ d'évitement, soit considérer que le cumul de la première manoeuvre $\Delta V.\vec{d}\_1$ d'évitement et de la seconde manoeuvre $\Delta V.\vec{d}\_2$ d'évitement est suffisant pour limiter le risque de collision entre le satellite 10 et le débris $d_1$ spatial.

Selon l'invention, une manoeuvre $\Delta V.\vec{d}$ d'évitement peut comprendre une variation maximale $\Delta V_{max}$ de vitesse pouvant être liée par exemple et de manière non limitative à la consommation en énergie maximale disponible du dispositif de propulsion du satellite 10 autorisée pour une manoeuvre $\Delta V.\vec{d}$ d'évitement. Une variation minimale $\Delta V_{min}$ de vitesse du satellite 10 est par exemple définie. Cette variation minimale est liée à l'énergie minimale de poussée nécessaire au satellite 10 pour effectuer un changement d'orbite du satellite 10.

Comme représenté à la figure 6, lorsque la probabilité de collision $P_1$ faisant suite à la seconde manoeuvre $\Delta V.\vec{d}\_2$ d'évitement déterminée est inférieure au seuil prédéfini de probabilité $P_{th}$ de collision, il est possible d'ajouter une étape d'optimisation MO comprenant l'optimisation de la seconde manoeuvre $\Delta V.\vec{d}\_2$ d'évitement, de sorte à, par exemple et de manière non limitative, limiter l'énergie nécessaire à cette seconde manoeuvre $\Delta V.\vec{d}\_2$ d'évitement permettant d'obtenir par exemple une probabilité de collision $P_1$ égale voire la plus proche du seuil prédéfini de probabilité $P_{th}$ de collision. A cet égard, la probabilité P1 de collision peut être recalculée selon un nouvel écart de vitesse $\Delta V\_2'$ de la seconde manoeuvre $\Delta V.\vec{d}\_2'$ d'évitement réduit au regard de l'écart de vitesse initiale, l'écart de vitesse $\Delta V\_2$ initial pouvant être un écart de vitesse maximal. La direction $\vec{d}\_2$ de la seconde manoeuvre $\Delta V.\vec{d}\_2$ d'évitement peut être également ajustée. Par exemple et de manière non limitative, la direction $\vec{d}\_2$ de la seconde manoeuvre $\Delta V.\vec{d}\_2$ d'évitement va être ajustée selon soit une direction $\vec{d}\_2$ dans le sens de la vitesse du satellite 10, soit dans une direction $\vec{d}\_2$ de sens opposé à la vitesse du satellite 10 dans le but de maximiser la séparation radiale à la date de plus proche passage TCA considérée.

Selon l'exemple de la figure 7, le procédé d'estimation de collision peut porter sur une pluralité de débris spatiaux. A cet effet, de manière similaire à la figure 6, une étape $M\_d_1$ relative à la détermination de la probabilité de collision $P_1$ avec le premier débris $d_1$ spatial est représentée. Cette étape $M\_d_1$ relative au calcul de la probabilité de collision $P_1$ été effectuée avec une première manoeuvre $\Delta V.\vec{d}\_11$ d'évitement et une seconde manoeuvre $\Delta V.\vec{d}\_21$ d'évitement respectivement prévues d'être effectuées lorsque le satellite10 sera en position orbitale correspondant à un argument de latitude $\alpha_{man11}$ de première manoeuvre $\Delta V.\vec{d}\_11$ d'évitement égale à l'argument de la latitude de collision avec le premier débris $d_1$ spatial moins une demi orbite $\alpha_{man11} = \alpha_{col1} - \pi$, et en position orbitale correspondant à un argument de latitude $\alpha_{man21}$ de seconde manoeuvre $\Delta V.\vec{d}\_21$ d'évitement égale à l'argument de la latitude de collision avec le premier débris $d_1$ spatial moins une orbites et demi $\alpha_{man21} = \alpha_{col1} - 3\pi$.

Dans le cas où la première manoeuvre $\Delta V.\vec{d}\_11$ d'évitement et la seconde manoeuvre $\Delta V.\vec{d}\_21$ d'évitement génèrent un risque de collision avec un second débris $d_2$ spatial, celui-ci doit être évité. Selon le même principe que celui exposé à la figure 6, selon l'exemple de la figure 7, une étape $M\_d_2$ représentative de l'estimation de la probabilité de collision $P_2$ avec le second débris $d_2$ spatial est représentée. Cette étape $M\_d_2$ relative au calcul de la probabilité $P_2$ avec le second débris $d_2$ spatial a été effectuée avec une première manoeuvre $\Delta V.\vec{d}\_12$ d'évitement et une seconde manoeuvre $\Delta V.\vec{d}\_22$ d'évitement respectivement prévues d'être effectuées lorsque le satellite 10 sera en position orbitale correspondant à un argument de latitude $\alpha_{man12}$ de première manoeuvre $\Delta V.\vec{d}\_12$ d'évitement égale à l'argument de la latitude de collision avec le second débris $d_2$ spatial moins une demi orbite $\alpha_{man12} = \alpha_{col2} - \pi$, et en position orbitale correspondant à un argument de latitude $\alpha_{man22}$ de seconde manoeuvre $\Delta V.\vec{d}\_22$ d'évitement égale à l'argument de la latitude de collision avec le second débris $d_2$ spatial moins une orbite et demi $\alpha_{man22} = \alpha_{col2} - 3\pi$.

Selon la figure 7, il est à noter que selon l'étape $M\_d_1$ initial relative à l'estimation de la probabilité de collision $P_1$ avec le premier débris $d_1$ spatial et que selon l'étape $M\_d_2$ relative à l'estimation de la probabilité de collision $P_2$ avec le second débris $d_2$ spatial, la première manoeuvre $\Delta V.\vec{d}\_11$ d'évitement liée au premier débris $d_1$ spatial est en conflit temporelle avec la seconde manoeuvre $\Delta V.\vec{d}\_22$ d'évitement liée au second débris $d_2$ spatial. En effet, l'argument de la latitude $\alpha_{man11} = \alpha_{col1} - \pi$ lié à la première manoeuvre $\Delta V.\vec{d}\_11$ d'évitement du premier débris $d_1$ spatial est trop proche de l'argument de la latitude $\alpha_{col2} - 3\pi$ lié à la seconde manoeuvre $\Delta V.\vec{d}\_22$ d'évitement liée au second débris $d_2$ spatial. La durée d'une manoeuvre empiète sur la durée de l'autre manoeuvre de sorte que la réalisation de ces deux manoeuvres n'est pas possible selon cette configuration. Plus particulièrement, la seconde manoeuvre $\Delta V.\vec{d}\_22$ d'évitement liée au second débris $d_2$ spatial comprend une zone d'empiétement avec la première manoeuvre $\Delta V.\vec{d}\_11$ d'évitement du premier débris $d_1$ spatial de sorte que cette zone d'empiètement correspond à une zone où la première manoeuvre $\Delta V.\vec{d}\_11$ d'évitement du premier débris $d_1$ spatial ne peut pas être effectuée du fait de la présence de la seconde manoeuvre $\Delta V.\vec{d}\_22$ d'évitement liée au second débris $d_2$ spatial.

A cet effet, une solution consiste à décaler les manoeuvres $\Delta V.\vec{d}$ d'évitements associées à un débris d'autant d'orbite nécessaire jusqu'à ne plus avoir de chevauchement entre les manoeuvres $\Delta V.\vec{d}$ d'évitement prévues pour l'évitement du premier débris $d_1$ spatial avec les manoeuvres $\Delta V.\vec{d}$ d'évitement du second débris $d_2$ spatial. Selon l'exemple de la figure 7, la première manoeuvre $\Delta V.\vec{d}\_11$ d'évitement du premier débris $d_1$ et la seconde manoeuvre $\Delta V.\vec{d}\_21$ d'évitement du premier débris $d_1$ ont toutes les deux étés décalées d'une orbite antérieure à leur position orbitale déterminée initialement. Plus précisément, l'argument de la latitude $\alpha_{man11}$ de la première manoeuvre $\Delta V.\vec{d}\_11$ d'évitement avec le premier débris $d_1$ spatial a été décalé à un nouvel argument de la latitude $\alpha_{man11}$, égale à l'argument de la latitude de collision avec le premier débris $d_1$ spatial moins une orbite et demi $\alpha_{man11},$ = $\alpha_{col1}$ - $3\pi$, l'argument de la latitude $\alpha_{man21}$ de la seconde manoeuvre $\Delta V.\vec{d}\_21$ d'évitement du premier débris $d_2$ spatial a été décalé à un nouvel argument de la latitude $\alpha_{man21}$, égale à l'argument de la latitude de collision avec le premier débris $d_1$ spatial moins deux orbites et demi $\alpha_{man21},$ = $\alpha_{col1}$ - $5\pi$,

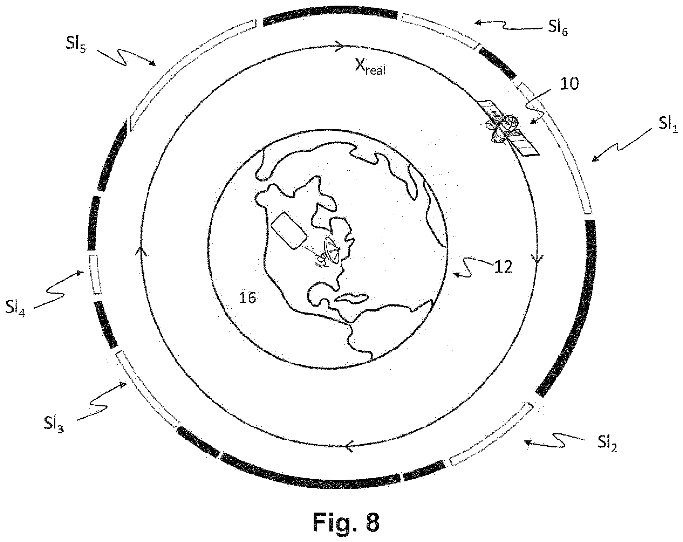

Selon la figure 8, un exemple d'une période de révolution du satellite 10 autour de la terre, aussi appelée période orbitale du satellite 10 autour de la Terre 12, est représenté de façon schématique par un cercle discontinu formé par plusieurs arcs de cercle. Chaque arc de cercle représente un créneau horaire pouvant être dédié à une opération du satellite 10. A titre d'exemple non limitatif, et selon la figure 6, la période orbitale du satellite 10 peut comprendre neufs créneaux horaires prévus pour diverses opérations prédéterminées du satellite 10 comme des opérations de charge d'une batterie d'alimentation électrique du satellite 10, des corrections si nécessaire de l'attitude du satellite 10, des photographies de la Terre 12 et ou tout autres opérations du satellite 10. A titre d'exemple non limitatif, et selon la figure 8, la période orbitale du satellite 10 peut comprendre six créneaux horaires non dédiés à des opérations prédéterminées que l'on nommera dans la suite de la description comme créneaux libres $SI_1$, $SI_2$, $SI_3$, $SI_4$, $SI_5$, $SI_6$ de manoeuvre.

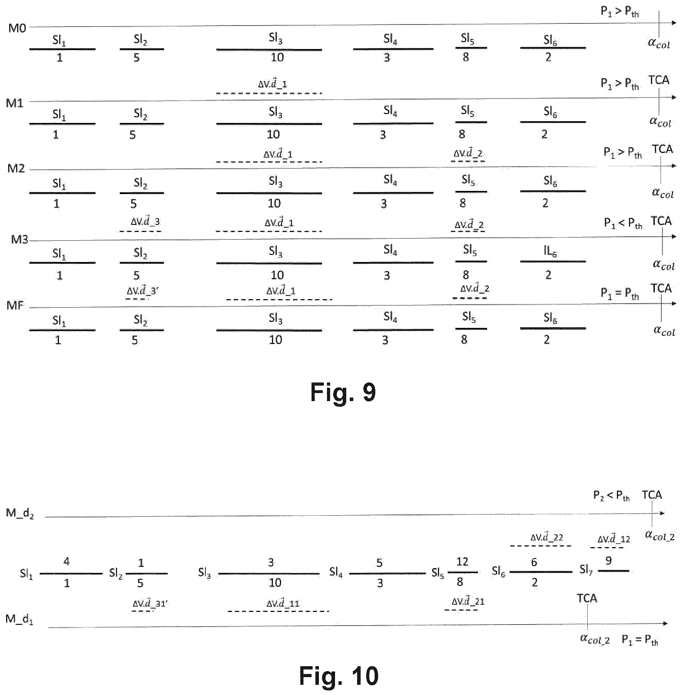

Selon l'exemple de la figure 9, en correspondance avec la figure 8, le procédé d'estimation de collision, peut comprendre la détermination du meilleur créneau libre $SI_1$, $SI_2$, $SI_3$, $SI_4$, $SI_5$, $SI_6$ de manoeuvre durant lequel une manoeuvre $\vec{d}$ d'évitement peut être effectuée de sorte à obtenir la probabilité de collision $P_1$ la plus faible. Le procédé d'estimation de collision, peut comprendre également la détermination d'une pluralité de manoeuvres $\Delta V.\vec{d}$ d'évitement consécutives, chaque créneau libre $SI_1$, $SI_2$, $SI_3$, $SI_4$, $SI_5$, $SI_6$ de manoeuvre associé à chaque manoeuvre $\Delta V.\vec{d}$ d'évitement devant être sélectionné de sorte à limiter le nombre de manoeuvres $\Delta V.\vec{d}$ d'évitement pour réduire au maximum la probabilité de collision, c'est-à-dire pour obtenir une probabilité de collision $P_1$ inférieure ou égale au seuil prédéfini de probabilité $P_{th}$ de collision, de préférence pour obtenir une probabilité de collision proche voire égale au seuil prédéfini de probabilité $P_{th}$ de collision.

Cinq lignes représentent cinq étapes successives M0, M1, M2, M3, MF de détermination de créneau libres $SI_1$, $SI_2$, $SI_3$, $SI_4$, $SI_5$, $SI_6$ de manoeuvre et de manoeuvres $\Delta V.\vec{d}$ d'évitement permettant de réduire la probabilité de collision $P_1$ du satellite 10 avec le débris $d_1$ spatial. Plus particulièrement, la première ligne représente une étape préliminaire M0 de détermination des créneau libres $SI_1$, $SI_2$, $SI_3$, $SI_4$, $SI_5$, $SI_6$ de manoeuvre permettant l'exécution de manoeuvres $\Delta V.\vec{d}$ d'évitement et de classification des créneaux libres $SI_1$, $SI_2$, $SI_3$, $SI_4$, $SI_5$, $SI_6$ de manoeuvre déterminés selon une notation représentative de la séparation radiale maximale possible sur chacun des créneaux libres $SI_1$, $SI_2$, $SI_3$, $SI_4$, $SI_5$, $SI_6$ de manoeuvre entre le satellite 10 et le débris d1 à la date de plus proche passage TCA considérée. La seconde ligne, la troisième ligne et la quatrième ligne représentent respectivement une première étape M1 de détermination d'une première manoeuvre $\Delta V.\vec{d}\_1$ d'évitement, une seconde étape M2 de détermination d'une seconde manoeuvre $\Delta V.\vec{d}\_2$ d'évitement et une troisième étape M3 de détermination d'une troisième manoeuvre $\Delta V.\vec{d}\_3$ d'évitement, la première manoeuvre $\Delta V.\vec{d}\_1$ d'évitement étant déterminée sur le créneau libre $SI_3$ de manoeuvre ayant obtenu la meilleure notation, la seconde manoeuvre $\Delta V.\vec{d}\_2$ d'évitement étant déterminée sur le créneau libre Sis de manoeuvre ayant obtenu la seconde meilleure notation, la troisième manoeuvre $\Delta V.\vec{d}\_3$ d'évitement étant déterminée sur le créneau libre $SI_2$ de manoeuvre ayant obtenu la troisième meilleure notation. La cinquième ligne représente une étape finale MF selon laquelle la troisième manoeuvre $\Delta V.\vec{d}\_3$ d'évitement est optimisé de sorte, par exemple à limiter l'énergie nécessaire à cette troisième manoeuvre $\Delta V.\vec{d}\_3$ d'évitement permettant d'obtenir par exemple une probabilité de collision $P_1$ égale voire la plus proche du seuil prédéfini de probabilité $P_{th}$ de collision.

L'étape préliminaire M0 consiste à déterminer les créneaux libres $SI_1$, $SI_2$, $SI_3$, $SI_4$, Sis, $SI_6$ de manoeuvre permettant l'exécution de manoeuvres $\Delta V.\vec{d}$ d'évitement en fonction d'une durée de manoeuvre, d'une date minimale et d'une date maximale de manoeuvre $\Delta V.\vec{d}$ d'évitement, qui sont définies comme suit : la date minimale correspond à la date où on peut effectivement commencer à faire des manoeuvres. En général ladite date minimale correspond à la date d'activation du calcul de la manoeuvre à laquelle on peut ajouter une marge correspondant par exemple à la durée minimale de préchauffage des tuyères des systèmes de poussés du satellite 10.

La date maximale est la date de plus proche passage TCA considérée, seuls les créneaux libres $SI_1$, $SI_2$, $SI_3$, $SI_4$, Sis, $SI_6$ de manoeuvre qui durent plus longtemps qu'une durée minimale permettant ainsi une poussée minimale nécessaire au changement d'orbite du satellite 10 sont conservés telle que par exemple et de manière non limitative, une durée minimale prédéfinie de cinq minutes.

La durée séparant deux créneaux libres $SI_1$, $SI_2$ de manoeuvre consécutifs peut être également prise en compte durant la détermination d'une pluralité de manoeuvres $\Delta V.\vec{d}$ d'évitement, une durée minimale entre deux manoeuvres $\Delta V.\vec{d}$ d'évitement, c'est-à-dire entre deux poussées pouvant être nécessaire. Par conséquent, seuls les créneaux libres $SI_1$, $SI_2$, $SI_3$, $SI_4$, Sis, $SI_6$ de manoeuvre qui permettent une durée minimale entre les poussées déjà prévues sont conservés, telle que par exemple et de manière non limitative, une durée prédéfinie de vingt minutes.

De manière non limitative, lorsqu'une manoeuvre $\Delta V.\vec{d}$ d'évitement est déterminée sur un créneau libre $SI_1$, $SI_2$, $SI_3$, $SI_4$, Sis, $SI_6$ et qu'un autre créneau libre $SI_1$, $SI_2$, $SI_3$, $SI_4$, Sis, $SI_6$ adjacent est espacé d'une durée inférieure à la durée minimale définie précédemment, il est possible de le rogner. Ainsi on ne tient compte uniquement que la durée sur une partie de cet autre créneau libre $SI_1$, $SI_2$, $SI_3$, $SI_4$, $SI_5$, $SI_6$ en ne conservant que la partie où une manoeuvre d'évitement peut être placée en évitant la partie qui ne satisferait pas à la contrainte de durée minimale. Dans ce cas particulier, il faudra réévaluer la notation dudit autre créneau libre $SI_1$, $SI_2$, $SI_3$, $SI_4$, Sis, $SI_6$ de manoeuvre rogné dans la mesure où sa durée a changé.

De préférence, l'étape préliminaire M0 consiste également en la classification des créneaux libres $SI_1$, $SI_2$, $SI_3$, $SI_4$, Sis, $SI_6$ de manoeuvre selon une notation représentative de la séparation radiale maximale possible sur chacun des créneaux libres $SI_1$, $SI_2$, $SI_3$, $SI_4$, Sis, $SI_6$ de manoeuvre entre le satellite 10 et le débris $d_1$ spatial à la date de plus proche passage TCA considérée. A cet effet, comme mentionné précédemment, le but d'une manoeuvre $\Delta V.\vec{d}$ d'évitement est de créer une séparation radiale à la date de plus proche passage TCA considérer. Par conséquent, les créneaux libres $SI_1$, $SI_2$, $SI_3$, $SI_4$, Sis, $SI_6$ de manoeuvre qui permettent une séparation radiale maximale doivent être utilisées en priorité. C'est pourquoi il est essentiel de calculer la séparation radiale $\Delta r$ à la date de plus proche passage TCA considérée associée à chacun des créneaux libres $SI_1$, $SI_2$, $SI_3$, $SI_4$, Sis, $SI_6$ de manoeuvre.

La détermination de la séparation radiale $\Delta r$ à la date de plus proche passage TCA considérée associée à chacun des créneaux libres $SI_1$, $SI_2$, $SI_3$, $SI_4$, Sis, $SI_6$ de manoeuvre comporte d'abord une étape de détermination de la durée maximale d_max_sl de la manoeuvre $\Delta V.\vec{d}$ d'évitement relatif à chacun des créneaux libres $SI_1$, $SI_2$, $SI_3$, $SI_4$, Sis, $SI_6$ de manoeuvre. La durée maximale d_max_sl de la manoeuvre $\Delta V.\vec{d}$ d'évitement est par exemple la durée du créneau libre de manoeuvre considéré si celle-ci est inférieure à la durée maximale d_max_aut de manoeuvre $\Delta V.\vec{d}$ autorisée pouvant être liée par exemple et de manière non limitative à la consommation en énergie maximale disponible du dispositif de propulsion du satellite 10 autorisée pour une manoeuvre $\Delta V.\vec{d}$ d'évitement. Selon un autre exemple, la durée maximale d_max_sl de la manoeuvre $\Delta V.\vec{d}$ d'évitement est la durée maximale d_max_aut de manoeuvre $\Delta V.\vec{d}$ autorisée lorsque la durée du créneau libre de manoeuvre est supérieure à ladite durée maximale de manoeuvre $\Delta V.\vec{d}$.

La détermination de la séparation radiale $\Delta r$ à la date de plus proche passage TCA considérée associée à chacun des créneaux libres $SI_1$, $SI_2$, $SI_3$, $SI_4$, $SI_5$, $SI_6$ de manoeuvre comporte également un calcul de l'écart de vitesse $\Delta V$ de la manoeuvre $\Delta V.\vec{d}$ d'évitement voulue sur chaque créneau libres $SI_1$, $SI_2$, $SI_3$, $SI_4$, $SI_5$, $SI_6$ de manoeuvre selon la poussée PS désirée à appliquer au satellite 10, la masse m du satellite 10, et la durée maximale d_max_sl de la manoeuvre $\Delta V.\vec{d}$ d'évitement déterminée ci-dessus, en utilisant l'équation suivante :

$$\Delta V = (PS / M) \times d\_max\_sl \qquad (26)$$

Déterminer la séparation radiale $\Delta r$ maximale pour chacun des créneaux libres $SI_1$, $SI_2$, $SI_3$, $SI_4$, $SI_5$, $SI_6$ de manoeuvre, revient à chercher une direction de poussée $\vec{d}$ dans le plan de l'orbite, c'est-à-dire à déterminer l'azimut az, c'est à dire l'angle entre la vitesse $\vec{V}$ du satellite et la direction de poussée $\vec{d}$ relative à la manoeuvre $\Delta V.\vec{d}$ d'évitement, qui maximise la séparation radiale $\Delta r$. Il existe deux attitudes optimales, ou azimut az, pour maximiser la séparation radiale $\Delta r$ : un azimut (az) qui augmente le demi-grand axe 'a' de l'orbite du satellite 10, c'est-à-dire une séparation radiale dite séparation radiale positive et un azimut ($az+\pi$) qui diminue le demi-grand axe 'a' de l'orbite du satellite 10, c'est-à-dire une séparation radiale dite séparation radiale négative. Cette séparation radiale $\Delta r$ peut être donnée par l'équation suivante :

$$\Delta r = \left[\frac{\partial r}{\partial a} \times \frac{\partial a}{\partial V_T} + \frac{\partial r}{\partial e_x} \times \frac{\partial e_x}{\partial V_T} + \frac{\partial r}{\partial e_y} \times \frac{\partial e_y}{\partial V_T}\right] \Delta V \cos(az) + \left[\frac{\partial r}{\partial e_x} \times \frac{\partial e_x}{\partial V_R} + \frac{\partial r}{\partial e_y} \times \right.$$

$$\left. \frac{\partial e_y}{\partial V_R}\right] \Delta V \sin(az) \tag{27}$$

selon laquelle, 'r' représente la position radiale du satellite, 'a' le demi grand axe de l'orbite du satellite, 'e$_x$' et 'e$_y$', des éléments orbitaux dans une représentation dite circulaire, Vr la composante radiale de l'incrément de vitesse de la manoeuvre $\Delta V.\vec{d}$, Vt la composante tangentielle de l'incrément de vitesse de la manoeuvre $\Delta V.\vec{d}$.

Par conséquent, les extrêmes de cette fonction de l'azimut az peuvent être trouvés en trouvant les deux solutions de l'équation suivante :

$$\tan(az) = \frac{\frac{\partial r}{\partial e_x} \times \frac{\partial e_x}{\partial V_R} + \frac{\partial r}{\partial e_y} \times \frac{\partial e_y}{\partial V_R}}{\frac{\partial r}{\partial a} \times \frac{\partial a}{\partial V_T} + \frac{\partial r}{\partial e_x} \times \frac{\partial e_x}{\partial V_T} + \frac{\partial r}{\partial e_y} \times \frac{\partial e_y}{\partial V_T}} \tag{28}$$

selon la laquelle les dérivées partielles de la position radiale $\partial r$ du satellite 10 peuvent être déterminées par différenciation de l'équation suivante :

$$r_{col} = \frac{a(1 - e_x^2 - e_y^2)}{1 + e_x \cos(\alpha_{col}) + e_y \sin(\alpha_{col})} \tag{29}$$

selon laquelle, 'r$_{col}$' représente la position radiale du satellite à la date de plus proche passage TCA considérée, et $\alpha_{col}$ représente l'argument de la latitude de collision.

L'équation (29) permet d'établir les relations mathématiques suivantes permettant de déterminer les paramètres de l'équation (28) :

$$\frac{\partial r}{\partial a} = \frac{r_{col}}{a} \tag{30}$$

$$\frac{\partial r}{\partial e_x} = -\frac{r_{col}}{a(1 - e_x^2 - e_y^2)}[2ae_x + r_{col}\cos(\alpha_{col})] \tag{31}$$

$$\frac{\partial r}{\partial e_y} = -\frac{r_{col}}{a(1 - e_x^2 - e_y^2)}[2ae_y + r_{col}\sin(\alpha_{col})] \tag{32}$$

Les dérivées partielles des éléments orbitaux de l'équation (28) sont données par les équations de Gauss suivantes :

$$\frac{\partial a}{\partial V_T} = \frac{2}{n^2 a} V_{man} \tag{33}$$

$$\frac{\partial e_x}{\partial V_T} = \frac{2}{V_{man}}[e_x + \cos(\alpha_{man})] \tag{34}$$

$$\frac{\partial e_y}{\partial V_T} = \frac{2}{V_{man}}[e_y + \sin(\alpha_{man})] \tag{35}$$

$$\frac{\partial e_x}{\partial V_R} = -\frac{1}{V_{man}}\left[\frac{r_{man}}{a}sin(\alpha_{man}) + 2e_y\right] \qquad (36)$$

$$\frac{\partial e_y}{\partial V_R} = \frac{1}{V_{man}}\left[\frac{r_{man}}{a}cos(\alpha_{man}) + 2e_x\right] \qquad (37)$$

selon lesquelles, $V_{man}$ représente la vitesse du satellite 10 au moment de la manoeuvre $\Delta V.\vec{d}$ d'évitement, $r_{man}$ représente la position radiale du satellite 10 au moment de la manoeuvre $\Delta V.\vec{d}$ d'évitement, $\alpha_{man}$ représente l'argument de la latitude du satellite 10 au moment de la manoeuvre $\Delta V.\vec{d}$ d'évitement, plus précisément au temps milieu du créneau libre de manoeuvre considéré.

Selon l'étape préliminaire M0, la notation de l'ensemble des créneaux libres $SI_1$, $SI_2$, $SI_3$, $SI_4$, $Sis$, $SI_6$ de manoeuvre peut être effectuée selon la détermination de la séparation radiale $\Delta r$ maximale, selon une séparation radiale positive ou selon une séparation radiale négative. Selon l'exemple de la figure 9, une notation sur 10 est distribuée à l'ensemble des créneaux libres $SI_1$, $SI_2$, $SI_3$, $SI_4$, $Sis$, $SI_6$ de manoeuvre pour lesquelles, a été déterminé selon l'équation (27), la séparation radiale $\Delta r$ maximale. A cet effet, le créneau libre de manoeuvre comportant la notation la plus élevée, est le troisième créneau libre $SI_3$ de manoeuvre. Puis viennent ensuite par ordre décroissant de la notation, le cinquième créneau libre $Sis$ de manoeuvre, le second créneau libre $SI_2$ de manoeuvre, le quatrième créneau libre $SI_4$ de manoeuvre, le sixième créneau libre $SI_6$ de manoeuvre et enfin le premier créneau libre $SI_1$ de manoeuvre.

Faisant suite à l'étape préliminaire M0, à l'étape M1, la détermination de la probabilité de collision $P_1$ du satellite 10 avec le débris $d_1$ est effectuée selon une première manoeuvre $\Delta V.\vec{d}\_1$ d'évitement placée sur le troisième créneau libre $SI_3$ de manoeuvre. L'écart de vitesse $\Delta V\_1$ associé à la première manoeuvre $\Delta V.\vec{d}\_1$ d'évitement est l'écart de vitesse maximale autorisé relativement au troisième créneau libre $SI_3$ de manoeuvre selon l'équation (26). La direction $\vec{d}\_1$ associée à la première manoeuvre $\Delta V.\vec{d}\_1$ d'évitement correspond à l'attitude déterminée pour optimiser la séparation radiale $\Delta r$, c'est-à-dire une direction $\vec{d}\_1$ correspondant à l'azimut az déterminée selon l'équation (28), soit pour une séparation radiale $\Delta r$ positive, soit pour une séparation radiale $\Delta r$ négative.

A partir de la détermination de la première manoeuvre $\Delta V.\vec{d}\_1$ d'évitement et du choix du troisième créneau libre $SI_3$ de manoeuvre, selon l'équation (7) et l'équation (9) relative à la figure 3, les moyens de calcul du satellite sont configurés pour propager l'orbite réelle $X_{real}$ du satellite 10, en prenant en compte la première manoeuvre $\Delta V.\vec{d}\_1$ d'évitement jusqu'à la date de plus proche passage TCA considérée de sorte à déterminer la probabilité de collision $P_1$ avec le débris spatial $d_1$ à la date de plus proche passage TCA considérée. Selon la figure 9, et à des fins de descriptions d'une pluralité de manoeuvre d'évitement, il est à considérer que la probabilité de collision $P_1$ déterminée suite à la première manoeuvre $\Delta V.\vec{d}\_1$ d'évitement reste trop élevée au regard du seuil prédéfini de probabilité $P_{th}$ de collision.

A cet effet, à l'étape M2, la détermination de la probabilité de collision $P_1$ du satellite 10 avec le débris $d_1$ est effectuée selon une seconde manoeuvre $\Delta V.\vec{d}\_2$ d'évitement placée sur le cinquième créneau libre $SI_5$ de manoeuvre, le calcul de la probabilité de collision $P_1$ du satellite 10 se faisant en tenant compte de la combinaison de la première manoeuvre $\Delta V.\vec{d}\_1$ d'évitement avec la seconde manoeuvre $\Delta V.\vec{d}\_2$ d'évitement. L'écart de vitesse $\Delta V\_2$ associé à la seconde manoeuvre $\Delta V.\vec{d}\_2$ d'évitement est l'écart de vitesse maximale autorisée relativement au cinquième créneau libre $SI_5$ de manoeuvre selon l'équation (26). La direction $\vec{d}\_2$ associée à la seconde manoeuvre $\Delta V.\vec{d}\_2$ d'évitement correspond à l'attitude déterminée pour optimiser la séparation radiale $\Delta r$, c'est-à-dire une direction $\vec{d}\_2$ correspondant à l'azimut az déterminée selon l'équation (28), et selon une séparation radiale $\Delta r$ de même type que la séparation radiale $\Delta r$ associée à la première manoeuvre $\Delta V.\vec{d}\_1$ d'évitement, c'est-à-dire soit positive, soit négative.

A partir de la détermination de la seconde manoeuvre $\Delta V.\vec{d}\_2$ d'évitement, du choix du cinquième créneau libre $SI_5$ de manoeuvre, selon l'équation (7) et l'équation (9) relative à la figure 3, les moyens de calcul du satellite sont configurés pour propager l'orbite réelle $X_{real}$ du satellite 10, en prenant en compte la première manoeuvre $\Delta V.\vec{d}\_1$ d'évitement et la seconde manoeuvre $\Delta V.\vec{d}\_2$ d'évitement jusqu'à la date de plus proche passage TCA considérée de sorte à déterminer la probabilité de collision $P_1$ avec le débris spatial $d_1$ à la date de plus proche passage TCA considérée. A cet effet, l'écart $\Delta X_{man}(TCA_{ref})$ de position orbitale défini selon l'équation (7) et l'équation (9) est un écart comprenant l'écart $\Delta Xsl_3$ de position orbitale dû à la première manoeuvre $\Delta V.\vec{d}\_1$ d'évitement durant le troisième créneau libre $SI_3$ de manoeuvre et l'écart $\Delta Xsl_5$ de position orbitale dû à la seconde manoeuvre $\Delta V.\vec{d}\_2$ d'évitement durant le cinquième créneau libre $SI_5$ de manoeuvre, soit $\Delta X_{man}(TCA_{ref}) = \Delta X_{man}(sl_3) + \Delta X_{man}(sl_5) + X_{real\_a}(TCA_{ref}) - X_{real\_b}(TCA_{ref})$, les écarts orbitaux $\Delta X_{man}(sl_3)$ et $\Delta X_{man}(sl_5)$ générés durant le troisième créneau libre $SI_3$ de manoeuvre et le cinquième créneau libre $Sis$ de manoeuvre étant dépendant du vecteur de poussée du satellite 10 relatif respectivement à la poussée de la première manoeuvre $\Delta V.\vec{d}\_1$ d'évitement et à la poussée de la seconde manoeuvre $\Delta V.\vec{d}\_2$ d'évitement. Selon la figure 9, et à des fins de descriptions d'une pluralité de manoeuvre d'évitement, il est à considérer que la probabilité de collision $P_1$ déterminée suite à la première manoeuvre $\Delta V.\vec{d}\_1$ d'évitement et à la seconde manoeuvre $\Delta V.\vec{d}\_2$ d'évitement reste trop élevée au regard du seuil prédéfini de probabilité $P_{th}$ de collision.

A cet effet, à l'étape M3, la détermination de la probabilité de collision $P_1$ du satellite 10 avec le débris $d_1$ est effectué selon une troisième manoeuvre $\Delta V.\vec{d}\_3$ d'évitement placée sur le second créneau libre $Sl_2$ de manoeuvre, le calcul de la probabilité de collision $P_1$ du satellite 10 se faisant en tenant compte de la combinaison de la première manoeuvre $\Delta V.\vec{d}\_1$ d'évitement avec la seconde manoeuvre $\Delta V.\vec{d}\_2$ d'évitement et également avec la troisième manoeuvre $\Delta V.\vec{d}\_3$ d'évitement. L'écart de vitesse $\Delta V\_3$ associé à la troisième manoeuvre $\Delta V.\vec{d}\_3$ d'évitement est l'écart de vitesse maximale autorisée relativement au second créneau libre $Sl_2$ de manoeuvre selon l'équation (26). La direction $\vec{d}\_3$ associée à la troisième manoeuvre $\Delta V.\vec{d}\_3$ d'évitement correspond à l'attitude déterminée pour optimiser la séparation radiale $\Delta r$, c'est-à-dire une direction $\vec{d}\_3$ correspondant à l'azimut az déterminée selon l'équation (28), et selon une séparation radiale $\Delta r$ de même type que la séparation radiale $\Delta r$ associée à la première manoeuvre $\Delta V.\vec{d}\_1$ d'évitement et à la seconde manoeuvre $\Delta V.\vec{d}\_2$ d'évitement, c'est-à-dire soit positive, soit négative.

A partir de la détermination de la troisième manoeuvre $\Delta V.\vec{d}\_3$ d'évitement, du choix du second créneau libre $Sl_2$ de manoeuvre, selon l'équation (7) et l'équation (9) relatives à la figure 3, les moyens de calcul du satellite 10 sont configurés pour propager l'orbite $X_{real}$ réelle du satellite 10, en prenant en compte la première manoeuvre $\Delta V.\vec{d}\_1$ d'évitement, la seconde manoeuvre $\Delta V.\vec{d}\_2$ d'évitement et la troisième manoeuvre $\Delta V.\vec{d}\_3$ d'évitement jusqu'à la date de plus proche passage TCA considérée de sorte à déterminer la probabilité de collision $P_1$ avec le débris spatial $d_1$ à la date de plus proche passage TCA considérée. A cet effet, L'écart $\Delta X_{man}$ de position orbitale défini selon l'équation (7) et l'équation (9) est un écart comprenant l'écart $\Delta Xsl_3$ de position orbitale dû à la première manoeuvre $\Delta V.\vec{d}\_1$ d'évitement durant le troisième créneau libre $Sl_3$ de manoeuvre, l'écart $\Delta Xsl_5$ de position orbitale dû à la seconde manoeuvre $\Delta V.\vec{d}\_2$ d'évitement durant le cinquième créneau libre $Sl_5$ de manoeuvre et l'écart $\Delta Xsl_2$ de position orbitale dû à la troisième manoeuvre $\Delta V.\vec{d}\_3$ d'évitement durant le second créneau libre $Sl_2$ de manœuvre, soit $\Delta X_{man}(TCA_{ref})$ = $\Delta X_{man}(sl_3) + \Delta X_{man}(sl_5) + \Delta X_{man}(sl_2) + X_{real\_a}(TCA_{ref}) - X_{real\_b}(TCA_{ref})$, les écarts orbitaux $\Delta X_{man}(sl_3)$, $\Delta X_{man}(sl_5)$ et respectivement $\Delta X_{man}(sl_2)$ générés durant le troisième créneau libre $Sl_3$ de manoeuvre, durant le cinquième créneau libre $Sl_5$ de manoeuvre et respectivement durant le second créneau libre $Sl_2$ de manoeuvre étant dépendant du vecteur de poussée du satellite 10 relatif à la poussée de la première manoeuvre $\Delta V.\vec{d}\_1$ d'évitement , à la poussée de la seconde manoeuvre $\Delta V.\vec{d}\_2$ d'évitement et respectivement à la poussée de la troisième manoeuvre $\Delta V.\vec{d}\_3$ d'évitement.

Selon la figure 9, la probabilité de collision $P_1$ déterminée suite à la première manoeuvre $\Delta V.\vec{d}\_1$ d'évitement en combinaison avec la seconde manoeuvre $\Delta V.\vec{d}\_2$ d'évitement et avec la troisième manoeuvre $\Delta V.\vec{d}\_3$ d'évitement est inférieure au seuil prédéfini de probabilité $P_{th}$ de collision. Dans ce cas, selon l'invention il est possible d'ajouter une étape d'optimisation MF comprenant l'optimisation de la troisième manoeuvre $\Delta V.\vec{d}\_3$ d'évitement, de sorte à, par exemple et de manière non limitative, limiter l'énergie nécessaire à cette troisième manoeuvre $\Delta V.\vec{d}\_3$ d'évitement permettant d'obtenir par exemple une probabilité de collision $P_1$ égale voire la plus proche du seuil prédéfini de probabilité $P_{th}$ de collision. A cet égard, la probabilité P1 de collision peut être recalculée selon un écart de vitesse $\Delta V\_3$ de la troisième manoeuvre $\Delta V.\vec{d}\_3$ d'évitement réduit au regard de l'écart de vitesse initiale, l'écart de vitesse initiale pouvant être un écart de vitesse maximale. La direction $\vec{d}\_3$ de la troisième manoeuvre $\Delta V.\vec{d}\_3$ d'évitement peut être également ajustée. Il est avantageusement possible d'effectuer les calculs de probabilité $P_1$ de collision selon soit une séparation radiale positive, soit selon une séparation radiale négative, le type de séparation permettant d'obtenir la probabilité $P_1$ de collision la plus faible étant celle retenue pour l'ensemble des manoeuvres $\Delta V.\vec{d}$ d'évitement.

Selon la figure 10, le procédé d'estimation de collision peut porter sur une pluralité de débris spatiaux pour lesquelles des manoeuvres $\Delta V.\vec{d}$ d'évitement doivent être placées sur les créneaux libres $Sl_1$, $Sl_2$, $Sl_3$, $Sl_4$, Sis, $Sl_6$ de manoeuvre. A cet effet, de manière identique à la figure 9, une étape $M\_d_1$ relative à la détermination de la probabilité de collision $P_1$ avec le premier débris $d_1$ spatial selon la date de plus porche passage TCA considérée et correspondant à un argument de la latitude $\alpha_{col1}$ du satellite à cette date de plus proche passage TCA considérée est représentée. Cette étape $M\_d_1$ relative au calcul de la probabilité de collision $P_1$ été effectuée selon une première manoeuvre $\Delta V.\vec{d}\_11$ d'évitement placée sur le troisième créneau libre $Sl_3$ de manoeuvre comportant la meilleure notation, c'est-à-dire une notation de 10, la première manoeuvre $\Delta V.\vec{d}\_11$ d'évitement devant être réalisée en combinaison avec une seconde manoeuvre $\Delta V.\vec{d}\_21$ d'évitement placée sur le cinquième créneau libre Sis de manoeuvre et comportant la seconde meilleure notation, c'est-à-dire une notation de 8, et en combinaison avec une troisième manoeuvre $\Delta V.\vec{d}\_31$ d'évitement placée sur le second créneau libre $Sl_2$ de manoeuvre et comportant la troisième meilleure notation, c'est-à-dire une notation de 5.

Selon l'hypothèse qu'un second débris $d_2$ spatial doit être évité par le satellite 10, selon le même principe que celui exposé à la figure 9, les créneaux libres de manoeuvre permettant des manoeuvres $\Delta V.\vec{d}$ d'évitement du second débris $d_2$ spatial sont identifiés et noté. A cet effet, puisque l'argument de la latitude $\alpha_{col2}$ du satellite 10 pour lequel la collision peut être probable avec le second débris $d_2$ spatial correspond à une date de plus proche passage postérieure à la date de plus proche passage liée au premier débris $d_1$ spatial, les six créneaux libres $SI_1$, $SI_2$, $SI_3$, $SI_4$, Sis, $SI_6$ de manoeuvre identifiés pour effectuer potentiellement les manoeuvres $\Delta V.\vec{d}$ d'évitement liées au premier débris $d_1$ spatial sont également potentiellement des créneaux libres $SI_1$, $SI_2$, $SI_3$, $SI_4$, $SI_5$, $SI_6$ de manoeuvre durant lesquelles des manoeuvres $\Delta V.\vec{d}$ d'évitement liées au second débris $d_2$ spatial sont réalisables. Un septième créneau libre $SI_7$ de manoeuvre localisé dans le temps entre la date de plus proche passage TCA considéré avec le premier débris $d_1$ spatial et la date de plus proche passage TCA considéré avec second débris $d_2$ est déterminé.

De la même manière qu'à la figure 9, une notation est affectée à chacun des créneaux libres $SI_1$, $SI_2$, $SI_3$, $SI_4$, $SI_5$, $SI_6$, $SI_7$ de manoeuvre permettant potentiellement des manoeuvres $\Delta V.\vec{d}$ d'évitement du second débris $d_2$ spatial. Selon l'exemple non limitatif de la figure 10, le cinquième créneau libre Sis de manoeuvre comporte la meilleure notation, c'est à dire une notation de 12. Le septième créneau libre $SI_7$ de manoeuvre comporte la seconde meilleure notation, c'est à dire une notation de 9, et le sixième créneau libre $SI_6$ de manoeuvre comporte la troisième meilleure notation, c'est à dire une notation de 6. Les autres créneaux libres de manoeuvre comportent des notations inférieures à celle du troisième meilleur créneau libre de manoeuvre. Les créneaux libres $SI_2$, $SI_3$, Sis, de manoeuvre déjà prévus pour les manoeuvres $\Delta V.\vec{d}$ d'évitement du premier débris $d_1$ spatial ne peuvent pas être également prévus pour les manoeuvres $\Delta V.\vec{d}$ d'évitement du second débris $d_2$. A cet effet, le cinquième créneau libre Sis de manoeuvre, bien que comportant la meilleure notation représentative de la séparation radiale $\Delta r$ maximale du satellite 10 possible sur ce créneau libre de manoeuvre, ne peut être prévu pour une manoeuvre manoeuvres $\Delta V.\vec{d}$ d'évitement du second débris $d_2$.

De manière similaire au premier débris $d_1$ spatial, des manoeuvres d'évitement du second débris $d_2$ sont déterminées sur les créneaux libres de manoeuvre disponibles de sorte à obtenir une probabilité de collision $P_2$ entre le satellite 10 et le second débris $d_2$ spatial inférieure voire égale au seuil prédéfini de probabilité $P_{th}$ de collision. Plus particulièrement et de manière non limitative, une première manoeuvre $\Delta V.\vec{d}$_12 d'évitement du second débris $d_2$ spatial est déterminé sur le septième créneau libre $SI_7$ de manoeuvre, une seconde manoeuvre $\Delta V.\vec{d}$_22 d'évitement devant être effectuée durant le sixième créneau libre $SI_6$ de manoeuvre est également identifiée de sorte à obtenir une probabilité de collision $P_2$ entre le satellite 10 et le second débris $d_2$ spatial inférieure voire égale au seuil prédéfini de probabilité $P_{th}$ de collision.

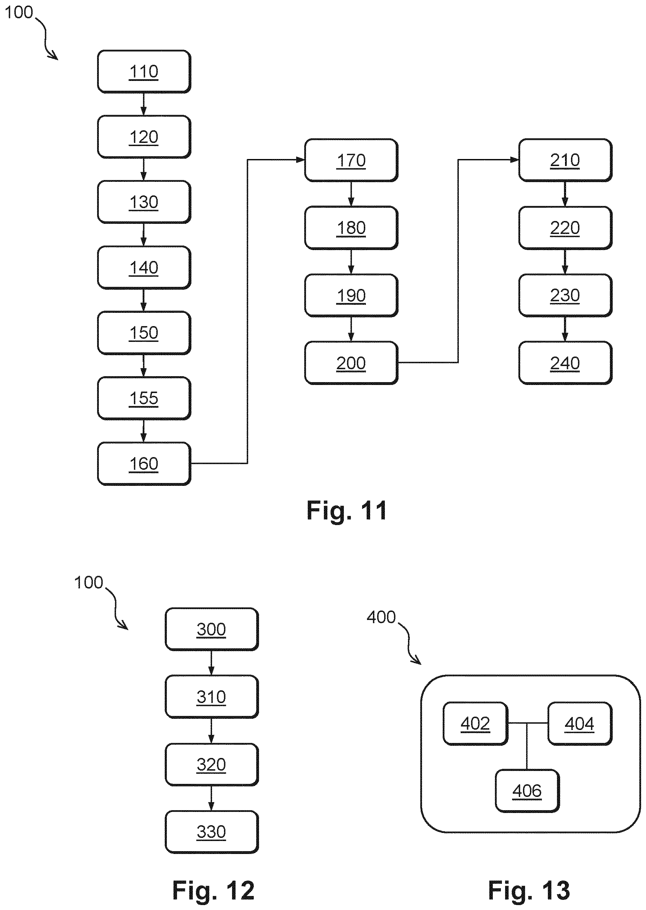

Un exemple non limitatif d'organigramme relatif au procédé 100 d'estimation de collision entre le satellite 10 en orbite autour de la Terre 12 et un débris $d_1$ spatial est illustré à la figure 11. Les trois premières étapes 110, 120, 130, sont des étapes réalisées au sol, par exemple, au centre de contrôle 18 de satellites. En plus de collecter les données orbitales du débris spatial $d_1$ par l'intermédiaire des agences de surveillances des débris dans l'espace, le centre de contrôle 18 de satellites est configuré pour réaliser une première étape d'obtention 110 de l'orbite $X_{ref}$ de référence du satellite 10, de l'orbite $X_{d1}$ du débris $d_1$ spatial et de leur covariance $COV_{sat}$, $COV_{d1}$ associée. Une seconde étape comprend la détermination 120 d'une éphéméride de données de transition d'état <p(t, $t_0$) représentative de la trajectoire de référence de l'orbite $X_{ref}$ du satellite 10. Plus particulièrement, l'éphéméride de données de transition d'état $\varphi(t, t_0)$ peut être une éphéméride de matrice de transition d'état. La dernière étape du procédé 100 réalisée au sol est une étape de communication 130 au satellite 10 de l'orbite de référence $X_{ref}$ et de l'orbite $X_{d1}$ du débris $d_1$ spatial ainsi que de leur covariance $COV_{sat}$, $COV_{d1}$ associée, et de l'éphéméride de données de transition d'état $\varphi(t, t_0)$. Il est à noter que par défaut, les données orbitales relatives à l'au moins un débris $d_1$ spatial sont également communiquées au satellite 10. Une date prédéterminée de plus proche passage $TCA_{ref}$ de référence entre le satellite 10 et l'au moins un débris $d_1$ spatial est également communiqué au satellite 10.

De préférence, plus particulièrement, afin de limiter le volume de données transmis au satellite 10, l'étape de communication 130 peut comprendre la transmission depuis le centre de contrôle 18 des satellites, d'une date d'activation $t_{cur}$ pour le calcul de la probabilité $P_1$ de collision ; une matrice de transition d'état $\varphi(t_{cur} \to TCA_{ref})$ entre la date d'activation $t_{cur}$ et la date de plus proche passage $TCA_{ref}$ de référence ; la position orbitale de référence du satellite à la date d'activation $t_{cur}$ et la date de plus proche passage $TCA_{ref}$ de référence ; et la position orbitale et la covariance du débris $d_1$ spatial à la date de plus proche passage $TCA_{ref}$ de référence.

Les étapes suivantes sont réalisées à bord du satellite 10. Du fait que le satellite embarque ses propres moyens de géolocalisation, une première étape à bord du satellite 10 consiste en la détermination 140 de la position orbitale $X_{real}$ réelle du satellite 10. Afin de pouvoir calculer une probabilité $P_1$ de collision avec l'au moins un débris d1 spatial, le procédé 100 comporte une étape de propagation 150 de l'orbite $X_{real}(t)$ réelle du satellite 10, de l'orbite $X_{d1}$ du débris $d_1$ spatial, et de leur covariance $COV_{sat}$, $COV_{d1}$ associée, jusqu'à la date de plus proche passage TCA selon l'éphéméride des données de transition d'état $\varphi(t, t_0)$ et l'orbite de référence $X_{ref}$ du satellite 10. Il est à noter selon la figure 11, qu'une étape facultative de détermination 155 d'une date de plus proche passage $TCA_{real}$ réelle peut être déterminée selon la description de la figure 4. A cet effet, selon le procédé 100 d'estimation de collision entre le satellite 10 en orbite autour de la Terre 12 et l'au moins un débris $d_1$ spatial, une étape de calcul 160 d'une probabilité $P_1$ de collision entre le satellite 10 et l'au moins un débris $d_1$ spatial peut être effectué soit à la date de plus proche passage $TCA_{ref}$ de référence, soit, de préféfrence à la date de plus proche passage $TCA_{real}$ déterminée à l'étape facultative précédente.

Les étapes 170 à 200 se rapportent plus particulièrement à des étapes liées à la détermination de la probabilité de collisions suite à une première manoeuvre $\Delta V.\vec{d}\_1$ d'évitement de collision permettant de réduire la probabilité de collision si celle-ci est par exemple et de manière non limitative supérieure à un seuil prédéfini de probabilité $P_{th}$ de collision. Selon cette hypothèse, le procédé comprend une étape de détermination 170 d'une première manoeuvre $\Delta V.\vec{d}\_1$ d'évitement de l'au moins un débris $d_1$ spatial à une date de première manoeuvre $\Delta V.\vec{d}\_1$ d'évitement prédéterminée selon une poussée du satellite 10 optimisant la séparation radiale d'avec l'orbite $X_{rea}(t)$ réelle du satellite 10. La première manoeuvre d'évitement ayant un effet direct sur l'orbite $X_{real}$ réelle du satellite, le procédé 100 comprend une étape de correction 180 de la position orbitale $X_{real}(t)$ réelle du satellite 10 à la date de la première manoeuvre $\Delta V.\vec{d}\_1$ d'évitement selon une première correction orbitale $\Delta X_{man}$ dépendante du vecteur de poussée du satellite 10 relative à la première manoeuvre $\Delta V.\vec{d}\_1$ d'évitement conformément à la description de la figure 3. A des fins de calcul de la probabilité $P1$ de collision prenant en compte cette première manoeuvre $\Delta V.\vec{d}\_1$ d'évitement, le procédé 100 comprend une étape de propagation 190 d'une première orbite réelle corrigée du satellite 10 depuis la position orbitale réelle $X_{real}(t)$ réelle corrigée et sa covariance $COV_{sat}$ jusqu'à la date de plus proche passage TCA considéré selon l'éphéméride des données de transition d'état $<p(t, t_0)$ et l'orbite $X_{ref}$ de référence du satellite 10 ou plus particulièrement selon la matrice de transition d'état $\varphi$ entre la date d'activation $t_{cur}$ du calcul d'une première nouvelle probabilité de collision $P_1$ et la date de plus proche passage $TCA_{ref}$ de référence.

Le procédé 100 comporte, suite à la détermination de la première orbite réelle corrigée du satellite 10, une étape de calcul 200 de la première nouvelle probabilité de collision $P_1$ entre le satellite 10 et l'au moins un débris $d_1$ spatial à la date de plus proche passage TCA considéré selon la première orbite $X_{real}(t)$ réelle corrigée du satellite 10.

Les étapes 210 à 240 se rapportent plus particulièrement à des étapes liées à la détermination de la probabilité de collisions suite à une seconde manoeuvre $\Delta V.\vec{d}\_2$ d'évitement de collision permettant de réduire la nouvelle probabilité de collision suite à la première manoeuvre $\Delta V.\vec{d}\_1$ d'évitement si celle-ci est par exemple et de manière non limitative toujours supérieure au seuil prédéfini de probabilité $P_{th}$ de collision. A cet effet, le procédé 100 peut comprendre une étape de détermination 210 d'une seconde manoeuvre $\Delta V.\vec{d}\_2$ d'évitement de l'au moins un débris $d_1$ spatial à une date de seconde manoeuvre $\Delta V.\vec{d}\_2$ d'évitement prédéterminée selon une poussée du satellite 10 optimisant la séparation radiale d'avec la première orbite $X_{real}$ réelle corrigée du satellite 10 déterminée à l'étape 190. La seconde manoeuvre $\Delta V.\vec{d}\_2$ d'évitement ayant un effet direct sur la première orbite réelle corrigée du satellite 10, le procédé 100 comprend une étape de correction 220 de la position orbitale du satellite 10 sur la première orbite réelle corrigée, à la date de la seconde manoeuvre $\Delta V.\vec{d}\_2$ d'évitement selon une seconde correction orbitale dépendante du vecteur de poussée du satellite 10 relative à la seconde manoeuvre $\Delta V.\vec{d}2$ d'évitement. A des fins de calcul de la probabilité $P_1$ de collision prenant en compte cette seconde manoeuvre $\Delta V.\vec{d}\_2$ d'évitement, le procédé 100 comprend une étape de propagation 230 d'une seconde orbite réelle corrigée du satellite 10 depuis la position orbitale corrigée du satellite 10 à l'étape 220 précédente et sa covariance $COV_{sat}$ jusqu'à la date de plus proche passage TCA considérée selon l'éphéméride des données de transition d'état $<p(t, t_0)$ et l'orbite $X_{ref}$ de référence du satellite 10 ou plus particulièrement selon la matrice de transition d'état $\varphi$ entre la date d'activation $t_{cur}$ du calcul d'une seconde nouvelle probabilité de collision $P_1$ et la date de plus proche passage $TCA_{ref}$ de référence.

Le procédé 100 comporte, suite à la détermination de la seconde orbite réelle corrigée du satellite 10, une étape de calcul 240 de la seconde nouvelle probabilité $P_1$ de collision entre le satellite 10 et l'au moins un débris $d_1$ spatial à la date de plus proche passage TCA considérée selon la seconde orbite réelle corrigée du satellite 10.

Si suite aux étapes 170 à 240, la seconde nouvelle probabilité $P_1$ de collision était encore trop élevée, c'est-à-dire par exemple encore supérieure au seuil prédéfini de probabilité $P_{th}$ de collision, d'autres étapes similaires aux étapes 170 à 200 et 210 à 240 peuvent être ajouté de sorte à déterminer d'autres manoeuvres d'évitement permettant de réduire la probabilité de collision entre le satellite 10 et l'au moins un débris $d_1$ spatial.

Tel que décrit à la figure 6, dans le cas d'un choix libre des dates des manoeuvres $\Delta V.\vec{d}$ d'évitement, de préférence les manoeuvres d'évitement peuvent avoir lieu selon un argment de latitude $\alpha_{man}$ de manoeuvre opposé à l'argument de latitude $\alpha_{cal}$ de collision avec le débris $d_1$ spatial, de sorte à optimisier la séparattion radiale avec l'orbite en cours du satellite 10.

De manière particulière et tel que décrit en référence à la figure 9, dans le cas de contraintes de créneaux

horaires libre $SI_1$, $SI_2$, $SI_3$, $SI_4$, Sis, $SI_6$ de manoeuvre, selon la figure 12, le procédé 100 peut comprendre une première étape de détermination 300 d'une pluralité de créneaux horaires libres $SI_1$, $SI_2$, $SI_3$, $SI_4$, Sis, $SI_6$ de manoeuvre permettant chacun l'exécution d'une manoeuvre $\Delta V.\vec{d}$ d'évitement du au moins un débris $d_1$ spatial. Bien qu'il serait possible d'attribuer à chaque manoeuvre $\Delta V.\vec{d}$ d'évitement une date de manoeuvre $\Delta V.\vec{d}$ durant un créneau horaire libre $SI_1$, $SI_2$, $SI_3$, $SI_4$, Sis, $SI_6$ de manoeuvre distinct d'un autre créneau horaire libre $SI_1$, $SI_2$, $SI_3$, $SI_4$, Sis, $SI_6$ d'une autre manoeuvre $\Delta V.\vec{d}$ d'évitement, de préférence, le procédé comprend une étape de détermination 310 de la séparation radiale $\Delta r$ maximale possible entre le satellite 10 et l'au moins un débris $d_1$ spatial à la date de plus proche passage TCA considérée sur chacun des créneaux libres $SI_1$, $SI_2$, $SI_3$, $SI_4$, Sis, $SI_6$ de manoeuvre déterminé puis une étape de classification 320 des créneaux horaires libres $SI_1$, $SI_2$, $SI_3$, $SI_4$, Sis, $SI_6$ selon une notation représentative de la séparation radiale $\Delta r$ déterminée pour chaque créneau libre $SI_1$, $SI_2$, $SI_3$, $SI_4$, Sis, $SI_6$ de manoeuvre. Enfin, le procédé 100 comporte une étape d'attribution 330 à chaque manoeuvre $\Delta V.\vec{d}$ d'évitement, le créneau horaire libre $SI_1$, $SI_2$, $SI_3$, $SI_4$, Sis, $SI_6$ de manoeuvre de meilleure notation déterminée distinct du créneau horaire libre $SI_1$, $SI_2$, $SI_3$, $SI_4$, Sis, $SI_6$ d'une autre manoeuvre $\Delta V.\vec{d}$ d'évitement.

Dans un exemple qui ne fait pas partie de l'objet des revendications, le procédé peut par exemple être mis en oeuvre par des dispositifs du type du dispositif 400 tel que représenté à la figure 13. Le dispositif 400 pour la mise en oeuvre du procédé d'ajustement de trajectoire orbitale du satellite 10 peut comprendre une unité de traitement d'informations 402 de type processeur tel que par exemple et de manière non limitative, un processeur spécialisé dans le traitement du signal, ou encore un microcontrôleur, ou tout autre type de circuit permettant d'exécuter des instructions de type logicielles. Le dispositif 400 comporte également de la mémoire vive 404 associée à l'unité de traitement d'informations 402. L'unité de traitement d'informations 402 est configurée pour exécuter un programme, dit encore programme d'ordinateur, comprenant des instructions mettant en oeuvre le procédé 100 d'ajustement de trajectoire orbitale d'un satellite 10 décrit précédemment. Les instructions sont chargées dans la mémoire vive du dispositif 400 à partir de tout type de supports de stockage 406 tels que par exemple et de manière non limitative, une mémoire de type non volatile ou une mémoire externe telle qu'une carte mémoire amovible de stockage. Les instructions peuvent être également chargées par l'intermédiaire d'une connexion à un réseau de communication.

## Revendications

**1.** Procédé (100) d'estimation de collision entre un satellite (10) en orbite autour de la Terre (12) et au moins un débris ($d_1$) spatial, le procédé (100) comportant les étapes mises en oeuvre par des moyens de traitements d'information au sol de :

- obtention (110) d'une orbite ($X_{ref}$) de référence du satellite (10) et de sa covariance ($COV_{sat}$) et d'une orbite ($X_{d1}$) du débris ($d_1$) spatial et de sa covariance ($COV_{d1}$);
- détermination d'une date de plus proche passage ($TCA_{ref}$) de référence correspondant à la date à laquelle une distance entre une position orbitale de référence moyenne du satellite (10) et une position orbitale moyenne du débris ($d_1$) spatial est la plus petite ;
- détermination (120) d'au moins une matrice de transition d'état ($\varphi(t_{cur}$->$TCA_{ref})$) permettant une propagation de l'orbite ($X_{ref}$) de référence du satellite 10 et de sa covariance ($COV_{sat}$) entre une date d'activation ($t_{cur}$) et la date de plus proche passage ($TCA_{ref}$) de référence ;

le procédé (100) comportant une étape mise en oeuvre par des moyens de communication (16) au sol de :

- communication (130) au satellite (10) d'au moins les informations suivantes : la date d'activation ($t_{cur}$), l'orbite de référence ($X_{ref}$) du satellite à la date d'activation ($t_{cur}$) et à la date de plus proche passage ($TCA_{ref}$) de référence, l'orbite ($X_{d1}$) du débris ($d_1$) spatial et sa covariance ($COV_{d1}$) à la date de plus proche passage ($TCA_{ref}$) de référence, et ladite matrice de transition d'état ($\varphi(t_{cur}$->$TCA_{ref})$) ;

le procédé (100) comportant les étapes mises en oeuvre par des moyens de calculs à bord du satellite (10) de :

- détermination (140) en temps réel d'une orbite ($X_{real}$) réelle du satellite (10) à la date d'activation ($t_{cur}$) par un dispositif de navigation du satellite ;
- propagation (150) de l'orbite ($X_{real}$) réelle du satellite (10) et de sa covariance ($COV_{sat}$) jusqu'à la date de plus proche passage ($TCA_{ref}$) de référence en fonction de ladite matrice de transition d'état ($\varphi(t_{cur}$->$TCA_{ref})$), de l'orbite de référence ($X_{ref}$) du satellite (10) à la date de plus proche passage ($TCA_{ref}$) de référence, et d'une différence orbitale ($\Delta X$) entre l'orbite ($X_{real}$) réelle et l'orbite ($X_{ref}$) de référence du satellite (10) à la date d'activation ($t_{cur}$);

- calcul (160), à la date d'activation ($t_{cur}$); d'une première probabilité ($P_1$) de collision entre le satellite (10) et ledit débris ($d_1$) spatial en fonction de positions orbitales du satellite et du débris à une date de plus proche passage (TCA) correspondant à la date de plus proche passage ($TCA_{ref}$) de référence ou à une date de plus proche passage ($TCA_{real}$) réelle calculée en tenant compte de l'orbite ($X_{real}$) réelle du satellite (10), de sorte à évaluer la nécessité de modifier la trajectoire orbitale du satellite (10), chaque position orbitale du satellite et respectivement du débris spatial étant obtenue à partir de l'orbite du satellite et respectivement du débris spatial.

2. Procédé (100) selon la revendication précédente comportant de plus une étape mise en oeuvre par les moyens de calculs à bord du satellite (10) précédant l'étape de calcul (160) de la première probabilité ($P_1$) de collision, de :

   détermination (155) de la date de plus proche passage (TCA) correspondant à la date de plus proche passage ($TCA_{real}$) réelle, par incrémentation successive, depuis la date de plus proche passage ($TCA_{ref}$) de référence prédéterminée par les moyens de traitements d'information au sol et transmise préalablement au satellite, d'un décalage temporel ($\Delta TCA$) vérifiant, à la date de plus proche passage ($TCA_{real\_N}$) réelle, un résultat quasi nul du produit scalaire d'un écart ($\overrightarrow{\Delta X}$) entre une position orbitale réelle du satellite et une position orbitale du débris spatial avec un écart ($\overrightarrow{\Delta V}$) entre une vitesse orbitale réelle du satellite et une vitesse orbitale du débris spatial, la position orbitale et la vitesse orbitale du satellite et respectivement du débris spatial étant obtenues à partir de l'orbite ($X_{real}$, $X_{d1}$) du satellite et respectivement du débris spatial.

3. Procédé (100) selon l'une quelconque des revendications précédentes caractérisées en ce l'étape de calcul (160) de la première probabilité ($P_1$) de collision, mise en oeuvre par des moyens de calculs à bord du satellite, comprend la maximisation de la première probabilité ($P_1$) de collision par dilution des covariances des positions orbitales du satellite (10) et dudit débris ($d_1$) spatial.

4. Procédé (100) selon l'une quelconque des revendications précédentes comprenant en outre les étapes mises en oeuvre par des moyens de calculs à bord du satellite (10), lorsque la première probabilité ($P_1$) de collision est supérieure à un seuil prédéfini de probabilité ($P_{th}$) de collision, de :

   - détermination (170) d'une première manoeuvre ($\Delta V.\vec{d}\_1$) d'évitement dudit débris ($d_1$) spatial à une date de première manoeuvre ($\Delta V.\vec{d}\_1$) d'évitement prédéterminée selon une première poussée du satellite (10) optimisant la séparation radiale d'avec l'orbite ($X_{rea}(t)$) réelle du satellite (10) ;
   - correction (180) de la position orbitale ($X_{real}(t)$) réelle du satellite (10) à la date de la première manoeuvre ($\Delta V.\vec{d}\_1$) d'évitement selon une première correction orbitale ($\Delta X_{man}$) dépendante du vecteur de poussée du satellite (10) relative à la première manoeuvre ($\Delta V.\vec{d}\_1$) d'évitement ;
   - propagation (190) d'une deuxième orbite ($X_{real}(t)$) réelle corrigée du satellite (10) depuis la position orbitale réelle ($X_{real}(t)$) réelle corrigée et sa covariance ($COV_{sat}$) jusqu'à la date de plus proche passage (TCA) en fonction de ladite matrice de transition d'état ($\varphi(t_{cur}\text{->}TCA_{ref})$) et l'orbite ($X_{ref}$) de référence du satellite (10) ;
   - calcul (200) d'une seconde probabilité de collision entre le satellite (10) et ledit débris ($d_1$) spatial à la date de plus proche passage (TCA) selon la deuxième orbite ($X_{real}(t)$) réelle du satellite (10).

5. Procédé (100) selon la revendication 4 comprenant de plus les étapes mises en oeuvre par des moyens de calculs à bord du satellite (10), lorsque la seconde probabilité de collision est supérieure au seuil prédéfini de probabilité ($P_{th}$) de collision, de :

   - détermination (210) d'une seconde manoeuvre ($\Delta V.\vec{d}\_2$) d'évitement dudit débris ($d_1$) spatial à une date de seconde manoeuvre ($\Delta V.\vec{d}\_2$) d'évitement prédéterminée selon une seconde poussée du satellite (10) optimisant la séparation radiale d'avec la seconde orbite ($X_{real}(t)$) réelle du satellite (10) ;
   - correction (220) de la position orbitale du satellite (10) sur la seconde orbite ($X_{real}(t)$) réelle, à la date de la seconde manoeuvre ($\Delta V.\vec{d}\_2$) d'évitement selon une seconde correction orbitale ($\Delta X_{man}$) dépendante du vecteur de poussée du satellite (10) relative à la seconde manoeuvre ($\Delta V.\vec{d}\_2$) d'évitement ;
   - propagation (230) d'une troisième orbite ($X_{real}(t)$) réelle corrigée du satellite (10) depuis la position orbitale corrigée du satellite (10) à l'étape précédente et sa covariance ($COV_{sat}$) jusqu'à la date de plus proche passage (TCA) en fonction de ladite matrice de transition d'état ($\varphi(t_{cur}\text{->}TCA_{ref})$) et l'orbite ($X_{ref}$) de référence du satellite (10) ;
   - calcul (240) d'une troisième probabilité de collision entre le satellite (10) et ledit débris ($d_1$) spatial à la date de plus proche passage (TCA) selon la troisième orbite ($X_{rea}(t)$) réelle du satellite (10).

6. Procédé (100) selon l'une quelconque des revendications 4 ou 5 selon lequel la date des manoeuvres ($\Delta V.\vec{d}$) d'évitement a lieu selon un argument de latitude ($\alpha_{man}$) de manoeuvre opposé à l'argument de la latitude ($\alpha_{col}$) de collision avec le débris ($d_1$) spatial.

7. Procédé (100) selon l'une quelconque des revendications 4 à 5 selon lequel la date des manoeuvres ($\Delta V.\vec{d}$) d'évitement est déterminée selon les étapes de :

   - détermination (300) d'une pluralité de créneaux horaires libres ($SI_1$, $SI_2$, $SI_3$, $SI_4$, $SI_5$, $SI_6$) de manoeuvre permettant chacun l'exécution d'une manoeuvre ($\Delta V.\vec{d}$) d'évitement dudit débris ($d_1$) spatial ;
   - attribution (330) à chaque manoeuvre ($\Delta V.\vec{d}$) d'évitement d'une date de manoeuvre ($\Delta V.\vec{d}$) durant un créneau horaire libre ($SI_1$, $SI_2$, $SI_3$, $SI_4$, $SI_5$, $SI_6$) de manoeuvre déterminé distinct d'un autre créneau horaire libre ($SI_1$, $SI_2$, $SI_3$, $SI_4$, $SI_5$, $SI_6$) d'une autre manoeuvre ($\Delta V.\vec{d}$) d'évitement.

8. Procédé (100) selon la revendication précédente pour lequel l'étape d'attribution (330) comprend les étapes de :

   - détermination (310) de la séparation radiale ($\Delta r$) maximale possible entre le satellite (10) et le débris ($d_1$) spatial à la date de plus proche passage (TCA) sur chacun des créneaux libres ($SI_1$, $SI_2$, $SI_3$, $SI_4$, $SI_5$, $SI_6$) de manoeuvre déterminé ;
   - classification (320) des créneaux horaires libres ($SI_1$, $SI_2$, $SI_3$, $SI_4$, $SI_5$, $SI_6$) selon une notation représentative de la séparation radiale ($\Delta r$) déterminée pour chaque créneau libre ($SI_1$, $SI_2$, $SI_3$, $SI_4$, $SI_5$, $SI_6$) de manoeuvre ;

   l'étape d'attribution (330) comportant l'attribution à chaque manoeuvre ($\Delta V.\vec{d}$) d'évitement, le créneau horaire libre ($SI_1$, $SI_2$, $SI_3$, $SI_4$, $SI_5$, $SI_6$) de manoeuvre de meilleure notation déterminée distinct du créneau horaire libre ($SI_1$, $SI_2$, $SI_3$, $SI_4$, $SI_5$, $SI_6$) d'une autre manoeuvre ($\Delta V.\vec{d}$) d'évitement.

9. Procédé (100) selon la revendication précédente pour lequel chaque manoeuvre ($\Delta V.\vec{d}$) d'évitement comporte la direction (d) relative à la séparation radiale ($\Delta r$) maximale associée au créneau horaire libre ($SI_1$, $SI_2$, $SI_3$, $SI_4$, $SI_5$, $SI_6$) de manoeuvre attribué à chaque manoeuvre ($\Delta V.\vec{d}$) d'évitement.

10. Procédé (100) selon l'une quelconque des revendications 8 ou 9 pour lequel chaque manoeuvre ($\Delta V.\vec{d}$) d'évitement comporte un écart de vitesse ($\Delta V_{max}$) maximal autorisé durant le créneau horaire libre ($SI_3$) de manoeuvre attribué à chaque manoeuvre ($\Delta V.d$) d'évitement.

11. Procédé (100) selon l'une quelconque des revendications 4 à 10 selon lequel chaque correction orbitale ($\Delta X_{man}$) relative à chaque manoeuvre ($\Delta V.\vec{d}$) d'évitement est déterminée selon les étapes de :

   - propagation de l'orbite ($X_{real}(t)$) réelle du satellite (10) jusqu'à la date ($t_{man}$) de la manoeuvre ($\Delta V.\vec{d}$) d'évitement de sorte à obtenir une position orbitale ($X_{real\_b}(t_{man})$) avant manoeuvre ;
   - évaluation de l'effet de la manoeuvre ($\Delta X_{man}(t_{man})$) appliqué à l'orbite ($X_{real\_b}(t_{man})$) avant manoeuvre à la date ($t_{man}$) de la manoeuvre ($\Delta V.\vec{d}$) d'évitement de sorte à déterminer l'orbite réelle ($X_{real\_a}(t_{man})$) après la manoeuvre ($\Delta V.\vec{d}$) d'évitement à la date ($t_{man}$) de la manoeuvre ($\Delta V.\vec{d}$) d'évitement ;
   - propagation de l'orbite ($X_{real\_b}(t_{man})$) avant manoeuvre jusqu'à la date de plus proche passage (TCA) de sorte à obtenir une position orbitale ($X_{real\_b}(TCA)$) de l'orbite réelle sans manoeuvre ($\Delta V.\vec{d}$) d'évitement à la date de plus proche passage (TCA) ;
   - propagation de la position orbitale ($X_{real\_a}(t_{man})$) après manoeuvre jusqu'à la date de plus proche passage (TCA) de sorte à obtenir une position orbitale ($X_{real\_a}(TCA)$) de l'orbite réelle avec manoeuvre d'évitement à la date de plus proche passage (TCA) ;
   - détermination de l'écart ($\Delta X_{man}(TCA_{ref})$) de position orbitale à la date de plus proche passage (TCA) selon l'effet de la manoeuvre ($\Delta X_{man}(t_{man})$), selon la position orbitale ($X_{real\_b}(TCA)$) de l'orbite réelle sans manoeuvre ($\Delta V.\vec{d}$) d'évitement à la date de plus proche passage (TCA) et selon la position orbitale ($X_{real\_a}(TCA)$) de l'orbite réelle avec manoeuvre d'évitement à la date de plus proche passage (TCA).

**12.** Système d'estimation de collision entre un satellite (10) en orbite autour de la Terre (12) et au moins un débris ($d_1$) spatial, le système comprenant des moyens de traitement d'information au sol et des moyens de communication (16) au sol configurés pour :

- obtenir une orbite ($X_{ref}$) de référence du satellite (10) et sa covariance ($COV_{sat}$) et une orbite ($X_{d1}$) dudit débris ($d_1$) spatial et sa covariance ($COV_{d1}$) ;
- déterminer une date de plus proche passage ($TCA_{ref}$) de référence correspondant à la date à laquelle une distance entre une position orbitale de référence moyenne du satellite (10) et une position orbitale moyenne du débris ($d_1$) spatial est la plus petite ;
- déterminer au moins une matrice de transition d'état ($\varphi(t_{cur}\text{->}TCA_{ref})$) permettant une propagation de l'orbite ($X_{ref}$) de référence du satellite (10) et de sa covariance ($COV_{sat}$) entre une date d'activation ($t_{cur}$) et la date de plus proche passage ($TCA_{ref}$) de référence ;
- communiquer au satellite (10) au moins les informations suivantes : la date d'activation ($t_{cur}$); l'orbite de référence ($X_{ref}$) du satellite à la date d'activation ($t_{cur}$) et à la date de plus proche passage ($TCA_{ref}$) de référence, l'orbite ($X_{d1}$) dudit débris ($d_1$) spatial et sa covariance ($COV_{d1}$) à la date de plus proche passage ($TCA_{ref}$) de référence, et ladite matrice de transition d'état ($\varphi(t_{cur}\text{->}TCA_{ref})$) ;

le système comprenant des moyens de calcul embarqués à bord du satellite (10) configurés pour :

- déterminer en temps réel une orbite ($X_{real}$) réelle du satellite (10) à la date d'activation ($t_{cur}$) par un dispositif de navigation du satellite ;
- propager l'orbite ($X_{real}$) réelle du satellite (10) et sa covariance ($COV_{sat}$) jusqu'à la date de plus proche passage ($TCA_{ref}$) de référence en fonction de ladite matrice de transition d'état ($\varphi(t_{cur}\text{->}TCA_{ref})$), de l'orbite de référence ($X_{ref}$) du satellite (10) à la date de plus proche passage ($TCA_{ref}$) de référence, et d'une différence d'orbite ($\Delta X$) entre l'orbite ($X_{real}$) réelle et l'orbite ($X_{ref}$) de référence du satellite (10) à la date d'activation ($t_{cur}$) ;
- calculer, à la date d'activation ($t_{cur}$); une première probabilité ($P_1$) de collision entre le satellite (10) et ledit débris ($d_1$) spatial en fonction de positions orbitales du satellite et du débris à une date de plus proche passage (TCA) correspondant à la date de plus proche passage ($TCA_{ref}$) de référence ou à une date de plus proche passage ($TCA_{real}$) réelle calculée en tenant compte de l'orbite ($X_{real}$) réelle du satellite (10), de sorte à évaluer la nécessité de modifier la trajectoire orbitale du satellite (10), chaque position orbitale du satellite et respectivement du débris spatial étant obtenue à partir de l'orbite du satellite et respectivement du débris spatial.

**Patentansprüche**

**1.** Verfahren (100) zur Kollisionsschätzung zwischen einem Satelliten (10) in Umlaufbahn um die Erde (12) und mindestens einem Weltraumschrott ($d_1$), wobei das Verfahren (100) die von Informationsverarbeitungsmitteln am Boden implementierten Schritte umfasst des:

- Erhaltens (110) einer Referenzbahn ($X_{ref}$) des Satelliten (10) und seiner Kovarianz ($COV_{sat}$) und einer Bahn ($X_{d1}$) des Weltraumschrotts ($d_1$) und seiner Kovarianz ($COV_{d1}$);
- Bestimmens eines Referenzdatums eines nächsten Vorbeiflugs ($TCA_{ref}$), das dem Datum entspricht, an dem eine Entfernung zwischen einer mittleren Referenzbahnposition des Satelliten (10) und einer mittleren Bahnposition des Weltraumschrotts ($d_1$) am kleinsten ist;
- Bestimmens (120) mindestens einer Zustandsübergangsmatrix ($\varphi(t_{cur}\text{->}TCA_{ref})$), die eine Fortpflanzung der Referenzbahn ($X_{ref}$) des Satelliten (10) und seiner Kovarianz ($COV_{sat}$) zwischen einem Aktivierungsdatum ($t_{cur}$) und dem Referenzdatum des nächsten Vorbeiflugs ($TCA_{ref}$) ermöglicht;

wobei das Verfahren (100) einen von Kommunikationsmitteln (16) am Boden implementierten Schritt umfasst des:

- Kommunizierens (130) mindestens der folgenden Informationen an den Satelliten (10) : das Aktivierungsdatum ($t_{cur}$), die Referenzbahn ($X_{ref}$) des Satelliten am Aktivierungsdatum ($t_{cur}$) und am Referenzdatum des nächsten Vorbeiflugs ($TCA_{ref}$), die Bahn ($X_{d1}$) des Weltraumschrotts ($d_1$) und seine Kovarianz ($COV_{d1}$) am Referenzdatum des nächsten Vorbeiflugs ($TCA_{ref}$), und die Zustandsübergangsmatrix ($\varphi(t_{cur}\text{->}TCA_{ref})$);

wobei das Verfahren (100) die von Rechenmitteln an Bord des Satelliten (10) implementierten Schritte umfasst des:

- Bestimmens (140), in Echtzeit, einer realen Bahn ($X_{real}$) des Satelliten (10) am Aktivierungsdatum ($t_{cur}$) durch eine Navigationsvorrichtung des Satelliten;
- Fortpflanzens (150) der realen Bahn ($X_{real}$) des Satelliten (10) und seiner Kovarianz ($COV_{sat}$) bis zum Referenzdatum des nächsten Vorbeiflugs ($TCA_{ref}$) in Abhängigkeit von der Zustandsübergangsmatrix ($\varphi(t_{cur}\text{->}TCA_{ref})$), der Referenzbahn ($X_{ref}$) des Satelliten (10) am Referenzdatum des nächsten Vorbeiflugs ($TCA_{ref}$) und einer Bahndifferenz ($\Delta X$) zwischen der realen Bahn ($X_{real}$) und der Referenzbahn ($X_{ref}$) des Satelliten (10) am Aktivierungsdatum ($t_{cur}$);
- Berechnens (160), am Aktivierungsdatum ($t_{cur}$), einer ersten Kollisionswahrscheinlichkeit ($P_1$) zwischen dem Satelliten (10) und dem Weltraumschrott ($d_1$) in Abhängigkeit von Bahnpositionen des Satelliten und des Schrotts an einem Datum des nächsten Vorbeiflugs (TCA), das dem Referenzdatum des nächsten Vorbeiflugs ($TCA_{ref}$) oder einem realen Datum des nächsten Vorbeiflugs ($TCA_{real}$) entspricht, welches unter Berücksichtigung der realen Bahn ($X_{real}$) des Satelliten (10) berechnet wurde, um die Notwendigkeit, den Bahnpfad des Satelliten (10) zu verändern, zu bewerten, wobei jede Bahnposition des Satelliten bzw. des Weltraumschrotts auf Grundlage der Bahn des Satelliten bzw. des Weltraumschrotts erhalten wird.

**2.** Verfahren (100) nach dem vorstehenden Anspruch, das zudem einen von den Rechenmitteln an Bord des Satelliten (10) implementierten, dem Schritt des Berechnens (160) der ersten Kollisionswahrscheinlichkeit ($P_1$) vorausgehenden Schritt umfasst des:

Bestimmens (155) des Datums des nächsten Vorbeiflugs (TCA), das dem realen Datum des nächsten Vorbeiflugs ($TCA_{real}$) entspricht, durch sukzessives Inkrementieren ab dem Referenzdatum des nächsten Vorbeiflugs ($TCA_{ref}$), das von den Informationsverarbeitungsmitteln am Boden vorbestimmt und zuvor an den Satelliten übertragen wurde, eines Zeitversatzes ($\Delta TCA$), der am realen Datum des nächsten Vorbeiflugs ($TCA_{real\_N}$) ein Ergebnis von quasi Null des Skalarprodukts einer Abweichung ($\overrightarrow{\Delta X}$) zwischen einer realen Bahnposition des Satelliten und einer Bahnposition des Weltraumschrotts mit einer Abweichung ($\overrightarrow{\Delta V}$) zwischen einer realen Bahngeschwindigkeit des Satelliten und einer Bahngeschwindigkeit des Weltraumschrotts verifiziert, wobei die Bahnposition und die Bahngeschwindigkeit des Satelliten bzw. des Weltraumschrotts auf Grundlage der Bahn ($X_{real}$, $X_{d1}$) des Satelliten bzw. des Weltraumschrotts erhalten werden.

**3.** Verfahren (100) nach einem der vorstehenden Ansprüche, **dadurch gekennzeichnet, dass** der Schritt des Berechnens (160) der ersten Kollisionswahrscheinlichkeit ($P_1$), der von Rechenmitteln an Bord des Satelliten implementiert wird, das Maximieren der ersten Kollisionswahrscheinlichkeit ($P_1$) durch Verringern der Kovarianzen der Bahnpositionen des Satelliten (10) und des Weltraumschrotts ($d_1$) umfasst.

**4.** Verfahren (100) nach einem der vorstehenden Ansprüche, das, wenn die erste Kollisionswahrscheinlichkeit ($P_1$) größer ist als eine vordefinierte Kollisionswahrscheinlichkeitsschwelle ($P_{th}$), weiter die von Rechenmitteln an Bord des Satelliten (10) implementierten Schritte umfasst des:

- Bestimmens (170) eines ersten Weltraumschrott- ($d_1$) Ausweichmanövers ($\Delta V.\vec{d}\_1$) an einem vorbestimmten Datum eines ersten Ausweichmanövers ($\Delta V.\vec{d}\_1$) gemäß einem ersten Schub des Satelliten (10), der die radiale Trennung von der realen Bahn ($X_{rea}(t)$) des Satelliten (10) optimiert;
- Korrigierens (180) der realen Bahnposition ($X_{real}(t)$) des Satelliten (10) am Datum des ersten Ausweichmanövers ($\Delta V.\vec{d}\_1$) gemäß einer ersten Bahnkorrektur ($\Delta X_{man}$), die vom Schubvektor des Satelliten (10) in Bezug auf das erste Ausweichmanöver ($\Delta V.\vec{d}\_1$) abhängig ist;
- Fortpflanzens (190) einer korrigierten zweiten realen Bahn ($X_{real}(t)$) des Satelliten (10) ab der korrigierten realen Bahnposition ($X_{real}(t)$) und seiner Kovarianz ($COV_{sat}$) bis zum Datum des nächsten Vorbeiflugs (TCA) in Abhängigkeit von der Zustandsübergangsmatrix ($\varphi(t_{cur}\text{->}TCA_{ref})$) und der Referenzbahn ($X_{ref}$) des Satelliten (10) ;
- Berechnens (200) einer zweiten Kollisionswahrscheinlichkeit zwischen dem Satelliten (10) und dem Weltraumschrott ($d_1$) am Datum des nächsten Vorbeiflugs (TCA) gemäß der zweiten realen Bahn ($X_{real}(t)$) des Satelliten (10).

**5.** Verfahren (100) nach Anspruch 4, das, wenn die zweite Kollisionswahrscheinlichkeit größer ist als die vordefinierte Kollisionswahrscheinlichkeitsschwelle ($P_{th}$), zudem die von Rechenmitteln an Bord des Satelliten (10) implementierten Schritte umfasst des:

- Bestimmens (210) eines zweiten Weltraumschrott- ($d_1$) Ausweichmanövers ($\Delta V.\vec{d}\_2$) an einem vorbestimmten Datum eines zweiten Ausweichmanövers ($\Delta V.\vec{d}\_2$) gemäß einem zweiten Schub des Satelliten (10), der die radiale Trennung von der zweiten realen Bahn ($X_{real}(t)$) des Satelliten (10) optimiert;

- Korrigierens (220) der Bahnposition des Satelliten (10) auf der zweiten realen Bahn ($X_{real}(t)$) am Datum des zweiten Ausweichmanövers ($\Delta V.\vec{d}\_2$) gemäß einer zweiten Bahnkorrektur ($\Delta X_{man}$), die vom Schubvektor des Satelliten (10) in Bezug auf das zweite Ausweichmanöver ($\Delta V.\vec{d}\_2$) abhängig ist;

- Fortpflanzens (230) einer korrigierten dritten realen Bahn ($X_{real}(t)$) des Satelliten (10) ab der korrigierten Bahnposition des Satelliten (10) im vorhergehenden Schritt und seiner Kovarianz ($COV_{sat}$) bis zum Datum des nächsten Vorbeiflugs (TCA) in Abhängigkeit von der Zustandsübergangsmatrix ($\varphi(t_{cur}\text{->}TCA_{ref})$) und der Referenzbahn ($X_{ref}$) des Satelliten (10) ;

- Berechnens (240) einer dritten Kollisionswahrscheinlichkeit zwischen dem Satelliten (10) und dem Weltraumschrott ($d_1$) am Datum des nächsten Vorbeiflugs (TCA) gemäß der dritten realen Bahn ($X_{real}(t)$) des Satelliten (10).

6. Verfahren (100) nach einem der Ansprüche 4 oder 5, wobei das Datum der Ausweichmanöver ($\Delta V.\vec{d}$) gemäß einem Manöver-Breitengradargument ($\alpha_{man}$) stattfindet, das dem Argument des Breitengrads einer Kollision ($\alpha_{col}$) mit dem Weltraumschrott ($d_1$) entgegengesetzt ist.

7. Verfahren (100) nach einem der Ansprüche 4 bis 5, wobei das Datum der Ausweichmanöver ($\Delta V.\vec{d}$) gemäß den Schritten bestimmt wird des:

- Bestimmens (300) einer Vielzahl von freien Manöverzeitfenstern ($SI_1$, $SI_2$, $SI_3$, $SI_4$, $SI_5$, $SI_6$), die jeweils das Ausführen eines Weltraumschrott- ($d_1$) Ausweichmanövers ($\Delta V.\vec{d}$) ermöglichen;

- Zuweisens (330), zu jedem Ausweichmanöver ($\Delta V.\vec{d}$), eines Manöverdatums ($\Delta V.\vec{d}$) während eines bestimmten freien Manöverzeitfensters ($SI_1$, $SI_2$, $SI_3$, $SI_4$, $SI_5$, $SI_6$), das sich von einem anderen freien Zeitfenster ($SI_1$, $SI_2$, $SI_3$, $SI_4$, $SI_5$, $SI_6$) eines anderen Ausweichmanövers ($\Delta V.\vec{d}$) unterscheidet.

8. Verfahren (100) nach dem vorstehenden Anspruch, wobei der Schritt des Zuweisens (330) die Schritte umfasst des:

- Bestimmens (310) der maximal möglichen radialen Trennung ($\Delta r$) zwischen dem Satelliten (10) und dem Weltraumschrott ($d_1$) am Datum des nächsten Vorbeiflugs (TCA) an jedem der bestimmten freien Manöverfenster ($SI_1$, $SI_2$, $SI_3$, $SI_4$, $SI_5$, $SI_6$) ;

- Klassifizierens (320) der freien Zeitfenster ($SI_1$, $SI_2$, $SI_3$, $SI_4$, $SI_5$, $SI_6$) gemäß einer Notation, die für die für jedes freie Manöverfenster ($SI_1$, $SI_2$, $SI_3$, $SI_4$, $SI_5$, $SI_6$) bestimmte radiale Trennung ($\Delta r$) repräsentativ ist;

wobei der Schritt des Zuweisens (330) das Zuweisen, zu jedem Ausweichmanöver ($\Delta V.\vec{d}$), des freien Manöverzeitfensters ($SI_1$, $SI_2$, $SI_3$, $SI_4$, $SI_5$, $SI_6$) mit der besten bestimmten Notation umfasst, das sich vom freien Zeitfenster ($SI_1$, $SI_2$, $SI_3$, $SI_4$, $SI_5$, $SI_6$) eines anderen Ausweichmanövers ($\Delta V.\vec{d}$) unterscheidet.

9. Verfahren (100) nach dem vorstehenden Anspruch, wobei jedes Ausweichmanöver ($\Delta V.\vec{d}$) die Richtung (d) in Bezug auf die maximale radiale Trennung ($\Delta r$) umfasst, die dem freien Manöverzeitfenster ($SI_1$, $SI_2$, $SI_3$, $SI_4$, $SI_5$, $SI_6$) zugeordnet ist, welches jedem Ausweichmanöver ($\Delta V.\vec{d}$) zugewiesen ist.

10. Verfahren (100) nach einem der Ansprüche 8 oder 9, wobei jedes Ausweichmanöver ($\Delta V.\vec{d}$) eine maximale Geschwindigkeitsabweichung ($\Delta V_{max}$) umfasst, die während des freien Manöverzeitfensters ($SI_3$), das jedem Ausweichmanöver ($\Delta V.d$) zugewiesen ist, zulässig ist.

11. Verfahren (100) nach einem der Ansprüche 4 bis 10, wobei jede Bahnkorrektur ($\Delta X_{man}$) in Bezug auf jedes Ausweichmanöver ($\Delta V.\vec{d}$) gemäß den Schritten bestimmt wird des:

- Fortpflanzens der realen Bahn ($X_{real}(t)$) des Satelliten (10) bis zum Datum ($t_{man}$) des Ausweichmanövers ($\Delta V.\vec{d}$), um eine Bahnposition ($X_{real\_b}(t_{man})$) vor dem Manöver zu erhalten;

- Bewertens der Auswirkung des Manövers ($\Delta X_{man}(t_{man})$), die auf die Bahn ($X_{real\_b}(t_{man})$) vor dem Manöver angewendet wird, am Datum ($t_{man}$) des Ausweichmanövers ($\Delta V.\vec{d}$), um die reale Bahn ($X_{real\_a}(t_{man})$) nach dem Ausweichmanöver ($\Delta V.\vec{d}$) am Datum ($t_{man}$) des Ausweichmanövers ($\Delta V.\vec{d}$) zu bestimmen;

- Fortpflanzens der Bahn ($X_{real\_b}(t_{man})$) vor dem Manöver bis zum Datum des nächsten Vorbeiflugs (TCA), um eine Bahnposition ($X_{real\_b}(TCA)$) der realen Bahn ohne Ausweichmanöver ($\Delta V.\vec{d}$) am Datum des nächsten Vorbeiflugs (TCA) zu erhalten;
- Fortpflanzens der Bahnposition ($X_{real\_a}(t_{man})$) nach dem Manöver bis zum Datum des nächsten Vorbeiflugs (TCA), um eine Bahnposition ($X_{real\_a}(TCA)$) der realen Bahn mit Ausweichmanöver am Datum des nächsten Vorbeiflugs (TCA) zu erhalten;
- Bestimmens der Abweichung ($\Delta X_{man}(TCA_{ref})$) der Bahnposition am Datum des nächsten Vorbeiflugs (TCA) gemäß der Auswirkung des Manövers ($\Delta X_{man}(t_{man})$), gemäß der Bahnposition ($X_{real\_b}(TCA)$) der realen Bahn ohne Ausweichmanöver ($\Delta V.\vec{d}$) am Datum des nächsten Vorbeiflugs (TCA) und gemäß der Bahnposition ($X_{real\_a}(TCA)$) der realen Bahn mit Ausweichmanöver am Datum des nächsten Vorbeiflugs (TCA).

12. System zur Kollisionsschätzung zwischen einem Satelliten (10) in Umlaufbahn um die Erde (12) und mindestens einem Weltraumschrott ($d_1$), wobei das System Informationsverarbeitungsmittel am Boden und Kommunikationsmittel (16) am Boden umfasst, die konfiguriert sind zum:

- Erhalten einer Referenzbahn ($X_{ref}$) des Satelliten (10) und seiner Kovarianz ($COV_{sat}$) und einer Bahn ($X_{d1}$) des Weltraumschrotts ($d_1$) und seiner Kovarianz ($COV_{d1}$);
- Bestimmen eines Referenzdatums eines nächsten Vorbeiflugs ($TCA_{ref}$), das dem Datum entspricht, an dem eine Entfernung zwischen einer mittleren Referenzbahnposition des Satelliten (10) und einer mittleren Bahnposition des Weltraumschrotts ($d_1$) am kleinsten ist;
- Bestimmen mindestens einer Zustandsübergangsmatrix ($\varphi(t_{cur}\text{->}TCA_{ref})$), die eine Fortpflanzung der Referenzbahn ($X_{ref}$) des Satelliten (10) und seiner Kovarianz ($COV_{sat}$) zwischen einem Aktivierungsdatum ($t_{cur}$) und dem Referenzdatum des nächsten Vorbeiflugs ($TCA_{ref}$) ermöglicht;
- Kommunizieren mindestens der folgenden Informationen an den Satelliten (10) : das Aktivierungsdatum ($t_{cur}$), die Referenzbahn ($X_{ref}$) des Satelliten am Aktivierungsdatum ($t_{cur}$) und am Referenzdatum des nächsten Vorbeiflugs ($TCA_{ref}$), die Bahn ($Xd_1$) des Weltraumschrotts ($d_1$) und seine Kovarianz ($COV_{d1}$) am Referenzdatum des nächsten Vorbeiflugs ($TCA_{ref}$), und die Zustandsübergangsmatrix ($\varphi(t_{cur}\text{->}TCA_{ref})$); wobei das System an Bord des Satelliten (10) befindliche Rechenmittel umfasst, die konfiguriert sind zum:
- Bestimmen, in Echtzeit, einer realen Bahn ($X_{real}$) des Satelliten (10) am Aktivierungsdatum ($t_{cur}$) durch eine Navigationsvorrichtung des Satelliten;
- Fortpflanzen der realen Bahn ($X_{real}$) des Satelliten (10) und seiner Kovarianz ($COV_{sat}$) bis zum Referenzdatum des nächsten Vorbeiflugs ($TCA_{ref}$) in Abhängigkeit von der Zustandsübergangsmatrix ($\varphi(t_{cur}\text{->}TCA_{ref})$), der Referenzbahn ($X_{ref}$) des Satelliten (10) am Referenzdatum des nächsten Vorbeiflugs ($TCA_{ref}$) und einer Bahndifferenz ($\Delta X$) zwischen der realen Bahn ($X_{real}$) und der Referenzbahn ($X_{ref}$) des Satelliten (10) am Aktivierungsdatum ($t_{cur}$);
- Berechnen, am Aktivierungsdatum ($t_{cur}$), einer ersten Kollisionswahrscheinlichkeit ($P_1$) zwischen dem Satelliten (10) und dem Weltraumschrott ($d_1$) in Abhängigkeit von Bahnpositionen des Satelliten und des Schrotts an einem Datum des nächsten Vorbeiflugs (TCA), das dem Referenzdatum des nächsten Vorbeiflugs ($TCA_{ref}$) oder einem realen Datum des nächsten Vorbeiflugs ($TCA_{real}$) entspricht, welches unter Berücksichtigung der realen Bahn ($X_{real}$) des Satelliten (10) berechnet wurde, um die Notwendigkeit, den Bahnpfad des Satelliten (10) zu verändern, zu bewerten, wobei jede Bahnposition des Satelliten bzw. des Weltraumschrotts auf Grundlage der Bahn des Satelliten bzw. des Weltraumschrotts erhalten wird.

## Claims

1. A method (100) for estimating collision between a satellite (10) in orbit around the Earth (12) and at least one piece of space debris ($d_1$), the method (100) including the steps implemented by information processing means on the ground of:

- obtaining (110) a reference orbit ($X_{ref}$) of the satellite (10) and its covariance ($COV_{sat}$) and an orbit ($X_{d1}$) of the piece of space debris ($d_1$) and its covariance ($COV_{d1}$);
- determining a reference time of closest approach ($TCA_{ref}$) corresponding to the time on which a distance between a mean reference orbital position of the satellite (10) and a mean orbital position of the piece of debris ($d_1$) is the smallest;
- determining (120) at least one state transition matrix ($\varphi(t_{cur}\text{->}TCA_{ref})$) allowing propagation of the reference orbit ($X_{ref}$) of the satellite 10 and its covariance ($COV_{sat}$) between an activation time ($t_{cur}$) and the reference time of closest approach (TCA$_{ref}$);
the method (100) comprising a ste, implemented by communication means (16) on the ground of:

- communicating (130) to the satellite (10) at least the following pieces of information: the activation time (t$_{cur}$); the reference orbit (X$_{ref}$) of the satellite at the activation time (t$_{cur}$) and at the reference time of closest approach (TCA$_{ref}$), the orbit (X$_{d1}$) of the piece of space debris (d$_1$) and its covariance (COV$_{d1}$) at the reference time of closest approach (TCA$_{ref}$), and said state transition matrix ($\varphi$(t$_{cur}$->TCA$_{ref}$));

the method (100) including the steps implemented by calculation means on board the satellite (10) of:

- determining (140) in real time a true orbit (X$_{real}$) of the satellite (10) at the activation time (t$_{cur}$) by a navigation device of the satellite;
- propagating (150) the true orbit (X$_{real}$) of the satellite (10) and its covariance (COV$_{sat}$) up to the reference time of closest approach (TCA$_{ref}$) according to said state transition matrix ($\varphi$( t$_{cur}$->TCA$_{ref}$)), the reference orbit (X$_{ref}$) of the satellite (10) at the reference time of closest approach (TCA$_{ref}$), and an orbital difference ($\Delta$X) between the true orbit (X$_{real}$) and the reference orbit (X$_{ref}$) of the satellite (10) at the activation time (t$_{cur}$);
- calculating (160), at the activation time (t$_{cur}$); a first probability (P$_1$) of collision between the satellite (10) and said piece of space debris (d$_1$) according to orbital positions of the satellite and of the piece of debris at a time of closest approach (TCA) corresponding to the reference time of closest approach (TCA$_{ref}$) or to a real time of closest approach (TCA$_{real}$) calculated by taking into account the true orbit (X$_{real}$) of the satellite (10), so as to evaluate the need to modify the orbital trajectory of the satellite (10), each orbital position of the satellite and respectively of the piece of space debris being obtained from the orbit of the satellite and respectively of the piece of space debris.

2. The method (100) according to the preceding claim further including a step implemented by the calculation means on board the satellite (10) preceding the step of calculating (160) the first probability (P$_1$) of collision, of:
   determining (155) the time of closest approach (TCA) corresponding to the real time of closest approach (TCA$_{real}$), by successively incrementing, from the reference time of closest approach (TCA$_{ref}$) predetermined by the information processing means on the ground and transmitted beforehand to the satellite, a time shift ($\Delta$TCA) verifying, at the real time of closest approach (TCA$_{real\_N}$), a result which is almost zero of the scalar product of a difference ($\overrightarrow{\Delta X}$) between a true orbital position of the satellite and an orbital position of the piece of space debris with a difference ($\overrightarrow{\Delta V}$) between a true orbital speed of the satellite and an orbital speed of the piece of space debris, the orbital position and the orbital speed of the satellite and respectively of the piece of space debris being obtained from the orbit (X$_{real}$, X$_{d1}$) of the satellite and respectively of the piece of space debris.

3. The method (100) according to any one of the preceding claims, **characterised in that** the step of calculating (160) the first probability (P$_1$) of collision, implemented by calculation means on board the satellite, comprises maximising the first probability (P$_1$) of collision by dilution of covariances of the orbital positions of the satellite (10) and said piece of space debris (d$_1$).

4. The method (100) according to any one of the preceding claims further comprising the steps implemented by calculation means on board the satellite (10), when the first collision probability (P$_1$) is greater than a predefined collision probability threshold (P$_{th}$), of:

- determining (170) a first avoidance manoeuvre ($\Delta$V.$\vec{d}$\_1) of said piece of space debris (d$_1$) at a time of the first avoidance manoeuvre ($\Delta$V.$\vec{d}$\_1) predetermined according to a first thrust of the satellite (10) optimising the radial separation from the true orbit (X$_{real}$(t)) of the satellite (10);
- correcting (180) the true orbital position (X$_{real}$(t)) of the satellite (10) at the time of the first avoidance manoeuvre ($\Delta$V.$\vec{d}$\_1) according to a first orbital correction ($\Delta$X$_{man}$) dependent on the thrust vector of the satellite (10) relating to the first avoidance manoeuvre ($\Delta$V.$d$\_1);
- propagating (190) a second corrected true orbit (X$_{real}$(t)) of the satellite (10) from the corrected true orbital position (X$_{real}$(t)) and its covariance (COV$_{sat}$) up to the time of closest approach (TCA) according to said state transition matrix $\varphi$(t$_{cur}$->TCA$_{ref}$) and the reference orbit (X$_{ref}$) of the satellite (10);
- calculating (200) a second probability of collision between the satellite (10) and said piece of space debris (d$_1$) at the time of closest approach (TCA) according to the second true orbit (X$_{real}$(t)) of the satellite (10).

5. The method (100) according to claim 4 further comprising the steps implemented by calculation means on board the satellite (10), when the second probability of collision is greater than the predefined collision probability ($P_{th}$) threshold, of:

  - determining (210) a second avoidance manoeuvre ($\Delta V.\vec{d}\_2$) of said piece of space debris ($d_1$) at a time of a second avoidance manoeuvre ($\Delta V.\vec{d}\_2$) predetermined according to a second thrust of the satellite (10) optimising the radial separation from the second true orbit ($X_{real}(t)$) of the satellite (10);
  - correcting (220) the orbital position of the satellite (10) on the second true orbit ($X_{real}(t)$), at the time of the second avoidance manoeuvre ($\Delta V.\vec{d}\_2$) according to a second orbital correction ($\Delta X_{man}$) dependent on the thrust vector of the satellite (10) relating to the second avoidance manoeuvre ($\Delta V.\vec{d}\_2$);
  - propagating (230) a third corrected true orbit ($X_{real}(t)$) of the satellite (10) from the corrected orbital position of the satellite (10) in the previous step and its covariance ($COV_{sat}$) up to the time of closest approach (TCA) according to said state transition matrix $\varphi(t_{cur}\text{->}TCA_{ref})$ and the reference orbit ($X_{ref}$) of the satellite (10);
  - calculating (240) a third probability of collision between the satellite (10) and said piece of space debris ($d_1$) at the time of closest approach (TCA) according to the third true orbit ($X_{real}(t)$) of the satellite (10).

6. The method (100) according to any one of claims 4 or 5, according to which the time of the avoidance manoeuvres ($\Delta V.\vec{d}$) takes place according to an argument of the latitude ($\alpha_{man}$) of manoeuvre opposed to the argument of the latitude ($\alpha_{col}$) of collision with the piece of space debris ($d_1$).

7. The method (100) according to any one of claims 4 to 5, according to which the time of the avoidance manoeuvres ($\Delta V.\vec{d}$) is determined according to the steps of:

  - determining (300) a plurality of free manoeuvre time slots ($SI_1$, $SI_2$, $SI_3$, $SI_4$, $SI_5$, $SI_6$) each allowing the execution of a manoeuvre ($\Delta V.\vec{d}$) to avoid said piece of space debris ($d_1$);
  - allocating (330) to each avoidance manoeuvre ($\Delta V.\vec{d}$) a manoeuvre time ($\Delta V.\vec{d}$) during a determined free time slot ($SI_1$, $SI_2$, $SI_3$, $SI_4$, $SI_5$, $SI_6$) of a manoeuvre distinct from another free time slot ($SI_1$, $SI_2$, $SI_3$, $SI_4$, $SI_5$, $SI_6$) of another avoidance manoeuvre ($\Delta V.\vec{d}$).

8. The method (100) according to the preceding claim for which the allocation step (330) comprises the steps of:

  - determining (310) the maximum possible radial separation ($\Delta r$) between the satellite (10) and the piece of space debris ($d_1$) at the time of closest approach (TCA) on each of the determined free manoeuvre time slots ($SI_1$, $SI_2$, $SI_3$, $SI_4$, $SI_5$, $SI_6$);
  - classifying (320) the free time slots ($SI_1$, $SI_2$, $SI_3$, $SI_4$, $SI_5$, $SI_6$) according to a rating representative of the radial separation ($\Delta r$) determined for each free manoeuvre time slot ($SI_1$, $SI_2$, $SI_3$, $SI_4$, $SI_5$, $SI_6$);

  the allocation step (330) including the allocation to each avoidance manoeuvre ($\Delta V.\vec{d}$), of the free time slot ($SI_1$, $SI_2$, $SI_3$, $SI_4$, $SI_5$, $SI_6$) of a manoeuvre with the best determined rating distinct from the free time slot ($SI_1$, $SI_2$, $SI_3$, $SI_4$, $SI_5$, $SI_6$) of another avoidance manoeuvre ($\Delta V.\vec{d}$).

9. The method (100) according to the preceding claim for which each avoidance manoeuvre ($\Delta V.\vec{d}$) includes the direction (d) relating to the maximum radial separation ($\Delta r$) associated with the free manoeuvre time slot ($SI_1$, $SI_2$, $SI_3$, $SI_4$, $SI_5$, $SI_6$) allocated to each avoidance manoeuvre ($\Delta V.\vec{d}$).

10. The method (100) according to any one of claims 8 or 9 for which each avoidance manoeuvre ($\Delta V.\vec{d}$) includes a maximum authorised speed difference ($\Delta V_{max}$) during the free manoeuvre time slot ($SI3$) allocated to each avoidance manoeuvre ($\Delta V.d$).

11. The method (100) according to any one of claims 4 to 10, according to which each orbital correction ($\Delta X_{man}$) relating to each avoidance manoeuvre ($\Delta V.\vec{d}$) is determined according to the steps of:

  - propagating the true orbit ($X_{real}(t)$) of the satellite (10) up to the time ($t_{man}$) of the avoidance manoeuvre ($\Delta V.\vec{d}$) so as to obtain an orbital position ($X_{real\_b}(t_{man})$) before the manoeuvre;
  - evaluating the effect of the manoeuvre ($\Delta X_{man}(t_{man})$) applied to the orbit ($X_{real\_b}(t_{man})$) before the manoeuvre

at the time ($t_{man}$) of the avoidance manoeuvre ($\Delta V.\vec{d}$) so as to determine the true orbit ($X_{real\_a}(t_{man})$) after the avoidance manoeuvre ($\Delta V.\vec{d}$) at the time ($t_{man}$) of the avoidance manoeuvre ($\Delta V.\vec{d}$);

- propagating the orbit ($X_{real\_b}(t_{man})$) before the manoeuvre up to the time of closest approach (TCA) so as to obtain an orbital position ($X_{real\_b}(TCA)$) of the true orbit without avoidance manoeuvre ($\Delta V.\vec{d}$) at the time of closest approach (TCA);

- propagating the orbital position ($X_{real\_a}(t_{man})$) after the manoeuvre up to the time of closest approach (TCA) so as to obtain an orbital position ($X_{real\_a}(TCA)$) of the true orbit with avoidance manoeuvre at the time of closest approach (TCA);

- determining the orbital position difference ($\Delta X_{man}(TCA_{ref})$) at the time of closest approach (TCA) according to the effect of the manoeuvre ($\Delta X_{man}(t_{man})$), according to the orbital position ($X_{real\_b}(TCA)$) of the true orbit without avoidance manoeuvre ($\Delta V.\vec{d}$) at the time of closest approach (TCA) and according to the orbital position ($X_{real\_a}(TCA)$) of the true orbit with avoidance manoeuvre at the time of closest approach (TCA).

12. A system for estimating collision between a satellite (10) in orbit around the Earth (12) and at least one piece of space debris ($d_1$), the system comprising information processing means on the ground and communication means (16) on the ground configured for:

- obtaining a reference orbit ($X_{ref}$) of the satellite (10) and its covariance ($COV_{sat}$) and an orbit ($X_{d1}$) of said piece of space debris ($d_1$) and its covariance ($COV_{d1}$);
- determining a reference time of closest approach ($TCA_{ref}$) corresponding to the time on which a distance between a mean reference orbital position of the satellite (10) and a mean orbital position of the piece of debris ($d_1$) is the smallest;
- determining at least one state transition matrix ($\varphi(t_{cur}\text{->}TCA_{ref})$) allowing propagation of the reference orbit ($X_{ref}$) of the satellite (10) and its covariance ($COV_{sat}$) between an activation time ($t_{cur}$) and a reference time of closest approach ($TCA_{ref}$);
- communicating to the satellite (10) at least the following pieces of information: the activation time ($t_{cur}$); the reference orbit ($X_{ref}$) of the satellite at the activation time ($t_{cur}$) and at the reference time of closest approach ($TCA_{ref}$), the orbit ($X_{d1}$) of said piece of space debris ($d_1$) and its covariance ($COV_{d1}$) at the reference time of closest approach, and said state transition matrix ($\varphi(t_{cur}\text{->}TCA_{ref})$);

the system comprising calculation means on board the satellite (10) configured for:

- determining in real time a true orbit ($X_{real}$) of the satellite (10) at the activation time ($t_{cur}$) by a navigation device of the satellite;
- propagating the true orbit ($X_{real}$) of the satellite (10) and its covariance ($COV_{sat}$) up to the reference time of closest approach ($TCA_{ref}$) according to said state transition matrix $\varphi(t_{cur}\text{->}TCA_{ref})$, the reference orbit ($X_{ref}$) of the satellite (10) at the reference time of closest approach ($TCA_{ref}$), and an orbital difference ($\Delta X$) between the true orbit ($X_{real}$) and the reference orbit ($X_{ref}$) of the satellite (10) at the activation time ($t_{cur}$);
- calculating, at the activation time ($t_{cur}$); a first probability ($P_1$) of collision between the satellite (10) and said piece of space debris ($d_1$) according to orbital positions of the satellite and of the piece of debris at a time of closest approach (TCA) corresponding to the reference time of closest approach ($TCA_{ref}$) or to a real time of closest approach ($TCA_{real}$) calculated by taking into account the true orbit ($X_{real}$) of the satellite (10), so as to evaluate the need to modify the orbital trajectory of the satellite (10), each orbital position of the satellite and respectively of the piece of space debris being obtained from the orbit of the satellite and respectively of the piece of space debris.

Fig. 1

Fig. 2

**Fig. 3**

**Fig. 4**

$P(O,x,y)$

$COV_{dr} = COV_{sat} + COV_{d1}$

$d_1$

$R_{d1}$

$R_{cu} = R_{10} + R_{d1}$

$R_{d1}$   $R_{10}$

10

y

x

**Fig. 5**

Fig. 6

Fig. 7

**Fig. 8**

Fig. 9

Fig. 10

**Fig. 11**

**Fig. 12**

**Fig. 13**

**EP 4 157 722 B1**

**RÉFÉRENCES CITÉES DANS LA DESCRIPTION**

**Documents brevets cités dans la description**

- US 20080033648 A